# EUROPÄISCHE PATENTSCHRIFT

(11) **EP 4 147 119 B1**
(45) Veröffentlichungstag und Bekanntmachung des Hinweises auf die Patenterteilung: **19.03.2025**
(21) Anmeldenummer: 21726573.5
(22) Anmeldetag: 07.05.2021
(51) Int. Cl.: G06F 3/12

(54) **SYSTEM ZUM DRUCKEN VON FOTOS AN EINER FOTOSTATION**
SYSTEM FOR PRINTING PHOTOS AT A PHOTO STATION
SYSTÈME PERMETTANT D'IMPRIMER DES PHOTOS SUR UNE BORNE PHOTO

(30) Priorität: 08.05.2020 DE 102020112579
(43) Veröffentlichungstag der Anmeldung: 15.03.2023
(73) Patentinhaber: CEWE Stiftung & Co. KGaA, 26133 Oldenburg (DE)
(72) Erfinder: SCHÜTZ, Peter, 26316 Varel (DE)
(74) Vertreter: Eisenführ Speiser
(86) Internationale Anmeldenummer: PCT/EP2021/062230
(87) Internationale Veröffentlichungsnummer: WO 2021/224498

(56) Entgegenhaltungen:
- DE-A1- 102018 101 491
- US-A1- 2014 226 173
- US-A1- 2014 355 039

## Beschreibung

Die Erfindung bezieht sich auf ein System, ein Verfahren und ein Computerprogram zum Drucken von Fotos, die auf einem Smartphone mit einer Kamera gespeichert sind, an einer Fotostation, insbesondere in einem SB-Bereich beispielsweise einer Drogerie. Die Erfindung bezieht sich zudem auf eine Fotostation und ein Serversystem zur Verwendung in einem derartigen System.

Fotostationen, an denen eine Person auf einem Smartphone gespeicherte Fotos ausdrucken kann, stehen heutzutage beispielsweise in Drogerien und Supermärkten. Die Person kann das Smartphone zum Beispiel mittels eines Kabels mit der Fotostation verbinden, wonach über die Kabelverbindung die Fotos auf die Fotostation übertragen werden. Die Fotostation stellt eine grafische Benutzeroberfläche bereit, die es dem Benutzer ermöglicht, zu druckende Fotos auszuwählen und die zu druckenden Fotos zu bearbeiten. Die von dem Smartphone auf die Fotostation übertragenen und dann auf der Fotostation bearbeiteten Fotos werden dann schließlich an der Fotostation gedruckt.

Die Verbindung des Smartphones mit der Fotostation und auch die Interaktion des Benutzers mit der Fotostation beispielsweise zum Auswählen von Fotos oder zur Bearbeitung der Fotos erfordert, dass die Person die Fotostation berührt, wobei, da die Fotostation von unterschiedlichen Personen benutzt wird, dies unter Hygienegesichtspunkten nachteilig sein kann.

Es ist daher eine Aufgabe der vorliegenden Erfindung, ein System, ein Verfahren und ein Computerprogram zum Drucken von Fotos, die auf einem Smartphone mit Kamera gespeichert sind, an einer Fotostation, insbesondere in einem SB-Bereich beispielsweise einer Drogerie, bereitzustellen, die es ermöglichen, die auf dem Smartphone gespeicherten Fotos von dem Smartphone auf die Fotostation zu übertragen und dann zu drucken, ohne dass eine Person die Fotostation berühren muss.

US2014226173 A1, US2014355039 A1 und DE102018101491 A1 beschreiben alle das Ausdrucken von auf einem Smartphone gespeicherten Dokumenten auf einem Drucker.

Die Aufgabe wird durch ein System zum Drucken von Fotos, die auf einem Smartphone mit Kamera gespeichert sind, an einer Fotostation, insbesondere in einem SB-Bereich beispielsweise einer Drogerie gelöst, wobei das System umfasst:
- die Fotostation, wobei die Fotostation einen oder mehrere Drucker zum Drucken von Fotos umfasst, und ein Display zum Anzeigen eines Codes aufweist, und
- ein Serversystem, das mit der Fotostation über eine erste Datenverbindung verbunden ist und mit dem Smartphone über eine zweite Datenverbindung verbindbar ist, wobei das System so konfiguriert ist, dass die Fotostation, das Smartphone und das Serversystem, wie folgt, gesteuert werden:
   - die Fotostation erzeugt einen Identifizierungscode, in dem eine Identifizierungsinformation codiert ist, die indikativ ist für die Fotostation, und zeigt diesen zusammen mit einer Aufforderung an eine Person, diesen Identifizierungscode mittels der Kamera des Smartphones aufzunehmen, auf dem Display,
   - nach der Aufnahme des Identifizierungscodes, übermittelt das Smartphone den Identifizierungscode oder die Identifizierungsinformation, nachdem sie diese aus dem Identifizierungscode extrahiert hat, an das Serversystem und das Smartphone erzeugt eine grafische Benutzeroberfläche, die es der Person ermöglicht, von den gespeicherten Fotos zu druckende Fotos auszuwählen, wonach die ausgewählten Fotos von dem Smartphone zu dem Serversystem übertragen werden,
   - das Serversystem speichert die übertragenen Fotos, ordnet diese der Fotostation mittels der Identifizierungsinformation zu, erzeugt Miniaturansichten der übertragenen Fotos und überträgt die Miniaturansichten auf das Smartphone,
   - das Smartphone erzeugt eine grafische Benutzeroberfläche, die die übertragenen Miniaturansichten anzeigt und es der Person ermöglicht, jeder Miniaturansicht und damit jedem ausgewählten Foto ein oder mehrere Druckparameter zuzuordnen, um Zuordnungen zu erzeugen, wobei diese Zuordnungen jedem ausgewählten Foto zumindest eine Druckauflösung zuordnen, wobei die Druckparameter angeben, auf welche Art die Fotostation die Fotos drucken kann, wobei die Druckparameter zumindest eine Druckauflösung umfassen,
   - das Smartphone übermittelt die Zuordnungen an das Serversystem, das dann die Auflösungen der ausgewählten Fotos derart modifiziert, dass sie der jeweiligen Druckauflösung entsprechen, wonach das Serversystem die ausgewählten Fotos mit veränderter Auflösung und die Zuordnungen zu der Fotostation überträgt, die die ausgewählten Fotos mit veränderter Auflösung gemäß den in den Zuordnungen enthaltenen Druckparametern druckt.

Die Fotos werden demnach nicht direkt von dem Smartphone an die Fotostation übertragen, sondern über ein Serversystem, wobei eine Verknüpfung der Fotostation, des Serversystems und des Smartphones untereinander erfolgt, indem die Fotostation einen Identifizierungscode erzeugt, in dem eine Identifizierungsinformation codiert ist, die indikativ ist für die Fotostation, und diesen zusammen mit einer Aufforderung an eine Person, diesen Identifizierungscode mittels der Kamera des Smartphones aufzunehmen, auf dem Display anzeigt, wobei, nach der Aufnahme des Identifizierungscodes, das Smartphone den Identifizierungscode oder die Identifizierungsinformation, nachdem sie diese aus dem Identifizierungscode extrahiert hat, an das Serversystem übermittelt. Dieses Verknüpfen des Smartphones, der Fotostation und des Serversystems erfordert keine Berührung der Fotostation, sondern lediglich eine Berührung des Smartphones. Da zudem die Auswahl der zu druckenden Fotos auf dem Smartphone erfolgt und auch die Zuordnungen der Druckparameter zu den Mininaturansichten und damit den ausgewählten Fotos auf dem Smartphone erfolgt, ist auch hierfür keine Berührung der Fotostation notwendig.

Zur Übermittlung der Identifizierungsinformation von dem Smartphone an das Serversystem kann das Smartphone die Identifizierungsinformation von dem Identifizierungscode extrahieren und die extrahierte Identifizierungsinformation übermitteln. Die Übermittlung der Identifizierungsinformation kann aber auch durch Übermittlung des Identifizierungscodes erfolgen, wobei dann das Serversystem die Identifizierungsinformation von dem Identifizierungscode extrahiert.

Da die Kommunikation a) zwischen dem Smartphone und dem Serversystem und b) zwischen der Fotostation und dem Serversystem stattfindet und insbesondere keine Daten mittels einer Datenverbindung direkt zwischen dem Smartphone und der Fotostation übertragen werden, muss das Smartphone nicht aufwendig an das Drucken an der Fotostation angepasst werden. Es ist insbesondere nicht notwendig, eine entsprechende App auf das Smartphone herunterzuladen.

Außerdem werden, da das Herunterladen der Fotos von dem Smartphone auf das Serversystem nach dem Auswählen der Fotos auf dem Smartphone, insbesondere unmittelbar nach diesem Auswählen, erfolgt, diese zu einem möglichst frühen Zeitpunkt von dem Smartphone auf das Serversystem übertragen, so dass längere Wartezeiten durch eine möglicherweise relativ geringe Bandbreite vermieden werden können. Da zudem das Serversystem die ausgewählten Bilder derart verändert, dass sie der Druckauflösung entsprechen, und die Druckauflösung meistens geringer ist als die Auflösung der von dem Smartphone aufgenommenen Fotos, wird in der Regel die von dem Serversystem zu der Fotostation zu übertragende Datenmenge signifikant reduziert. Durch die reduzierte Datenmenge, die von dem Serversystem zu der Fotostation zu übertragen ist, können grundsätzlich mögliche Wartzeiten, insbesondere bei einer relativ geringen zur Verfügung stehenden Bandbreite, weiter reduziert werden. Eine weitere Reduktion einer möglichen Wartezeit kann dadurch erreicht werden, dass das Erzeugen der Miniaturansichten und auch das Anpassen der Auflösungen der ausgewählten Bilder an die Druckauflösung auf dem Serversystem durchgeführt werden, wodurch die entsprechenden Berechnungen der Bildwerte schneller erfolgen können, da das Serversystem eine größere Rechnerleistung aufweist als ein (kleines) Smartphone oder eine Fotostation in beispielsweise einer Drogerie.

Es wird daher ein kontaktloser Sofortdruck ermöglicht, wobei sich der Ausdruck "kontaktlos" darauf bezieht, dass die Fotostation nicht berührt werden muss, und sich der Ausdruck "Sofortdruck" darauf bezieht, dass das Ausdrucken relativ schnell mittels der Fotostation durchgeführt werden kann.

Außerdem können neue Versionen der Berechnungen der Miniaturansichten und der Bilder mit der Druckauflösung relativ leicht installiert werden, da sie nur auf dem Serversystem installiert werden müssen und bereits dann für jede der unzähligen möglichen Kombinationen aus Smartphone und Fotostation zur Verfügung stehen. Dies kann gewährleisten, dass das Erzeugen der Miniaturansichten und das Verändern der ausgewählten Bilder derart, dass sie der Druckauflösung entsprechen, immer mit aktuellen optimierten Berechnungen durchgeführt wird, ohne davon abhängig zu sein, welche Funktionen das jeweilige Smartphone beziehungsweise die jeweilige Fotostation bereitstellt.

Der Identifizierungscode ist bevorzugt ein zweidimensionaler Code, insbesondere ein QR-Code. Der QR-Code hat unter anderem den Vorteil, dass er von jedem handelsüblichen Smartphone interpretierbar ist, so dass das Smartphone, wie oben ausgeführt, keine App benötigt, die speziell für das Drucken an der Fotostation ausgebildet ist. Auch andere Identifizierungscodes können verwendet werden, die keine Anpassung des Smartphones erfordern. Es wird für den Identifizierungscode demnach bevorzugt eine Codierung verwendet, die bereits auf dem Smartphone vorhanden ist.

Die Fotostation umfasst ein oder mehrere Drucker zum Drucken der Fotos. Bevorzugt umfasst die Fotostation ein oder mehrere Thermosublimationsdrucker.

Die Druckparameter können sich, neben einer Druckauflösung, beispielsweise auf ein Druckformat und/oder ein Druckmaterial beziehen. Das Druckformat bezieht sich insbesondere auf die Längenabmessung und die Breitenabmessung des schließlich gedruckten Fotos. Das Druckmaterial bezieht sich bevorzugt auf das Material, auf das das Foto gedruckt werden sollte. Dieses Material kann beispielsweise Fotopapier oder auch ein Aufklebermaterial sein, so dass die gedruckten Fotos Aufkleber sind.

In einer bevorzugten Ausführungsform umfassen die Druckparameter ein Druckformat und die Fotostation ist ausgebildet, die Fotos gemäß dem jeweiligen Druckformat digital zuzuschneiden. Insbesondere werden die Fotos bevorzugt nicht von dem Serversystem digital zugeschnitten, sondern nur durch die Fotostation. Bevorzugt weist die Fotostation für diesen und andere mögliche Bildverarbeitungsschritte einen entsprechend ausgebildeten Rechner auf. Die Fotostation ist zudem bevorzugt ausgebildet, vor dem digitalen Zuschneiden einen Bildqualität-Verbesserungsalgorithmus auf die Fotos anzuwenden. Der Bild-Verbesserungsalgorithmus ist insbesondere ausgebildet, die Fotos zu korrigieren. Diese Korrektur beinhaltet beispielsweise eine Farbkorrektur und/oder eine Schattenkorrektur. Bei der Farbkorrektur kann zum Beispiel ein Grün- oder Gelbstich entfernt werden. Die Korrektur kann auch eine Rote-Augen-Korrektur beinhalten. Da der Bild-Verbesserungsalgorithmus vor dem digitalen Zuschneiden auf die Fotos angewendet wird, kann der Bild-Verbesserungsalgorithmus einen größeren Teil, insbesondere das gesamte Foto, bei der Bildverbesserung berücksichtigen. Die führt zu einer verbesserten Bildqualität der digitalen Fotos und damit auch der schließlich gedruckten finalen Fotos.

In einer bevorzugten Ausführungsform umfassen die Druckparameter ein Druckformat und die Fotostation ist ausgebildet, die Fotos mittels eines Thermosublimationsdruckers zu drucken und die digitalen Fotos gemäß dem jeweiligen Druckformat in Abhängigkeit von einem Zustand des Thermosublimationsdruckers digital zuzuschneiden. Der Zustand des Thermosublimationsdruckers bezieht sich beispielsweise darauf, welche Farbfolie zum Drucken verwendet wird und/oder welche Menge an Farbfolie noch im Thermosublimationsdruckers vorhanden ist. Durch das digitale Zuschneiden in Abhängigkeit von dem Druckerzustand kann das Ausdrucken der Fotos optimiert werden.

Es ist bevorzugt, dass die Steuerung des Smartphones und des Serversystems mittels einer Webanwendung erfolgt, wobei die Fotostation konfiguriert ist, den Identifizierungscode derart zu erzeugen, dass er auch eine Internetadresse des Serversystem aufweist, das Smartphone konfiguriert ist, die Internetadresse von dem Identifizierungscode zu extrahieren und diese Internetadresse aufzurufen, wonach das Serversystem die Webanwendung startet, die dann auf dem Smartphone und dem Serversystem ausgeführt wird. Auch hier ist es nicht notwendig, eine App auf das Smartphone herunterzuladen. Das Smartphone benötigt lediglich ein Betriebssystem mit einem Webbrowser, der es ermöglicht, eine Webanwendung zusammen mit einem Serversystem auszuführen. Die technischen Anforderungen an das Smartphone für das Drucken an der Fotostation sind daher sehr gering.

Es ist weiter bevorzugt, dass die Fotostation konfiguriert ist, automatisch zu erkennen, ob der Fotostation Druckverbrauchsmaterialien fehlen, und, falls dies der Fall ist, die Druckparameter entsprechend anzupassen. Die Fotostation kann beispielsweise ausgebildet sein, Fotos unterschiedlicher Qualität oder unterschiedliche Druckartikel mit den Fotos auszudrucken. Die unterschiedlichen Qualitäten können sich beispielsweise auf "matt" oder "glänzend" beziehen. Die unterschiedlichen Druckartikel können sich beispielsweise auf bedruckte Aufkleber oder "normale" Fotos beziehen, wobei im letzteren Fall auch unterschiedliche Arten von zu bedruckendem Material als Druckparameter ausgewählt werden könnten. Wenn die Fotostation Verbrauchsmaterialien wie beispielsweise ein bestimmtes zu bedruckendes Material, Farbbänder für einen bestimmten Drucker et cetera nicht aufweist, kann dies die Fotostation automatisch erkennen und die Druckparameter entsprechend anpassen. Wenn beispielsweise zu bedruckende Aufkleber nicht mehr in der Fotostation vorhanden sind, können die Druckparameter so angepasst werden, dass sie nicht mehr die Möglichkeit angeben, ein Foto auf einen Aufkleber zu drucken.

In einer Ausführungsform bestimmt die Fotostation, ob sich das Smartphone in der Umgebung der Fotostation befindet, und druckt die ausgewählten Fotos mit veränderter Auflösung gemäß den in den Zuordnungen enthaltenen Druckparametern nur dann, wenn bestimmt worden ist, dass sich das Smartphone in der Umgebung der Fotostation befindet. Die Fotostation bestimmt demnach, ob sich genau das Smartphone, mit dem die zu druckenden Fotos ausgewählt und die Druckparameter zugeordnet worden sind, in der Umgebung der Fotostation befindet, wobei nur in diesem Fall die Fotos gedruckt werden. Diese Bestimmung kann beispielsweise vollautomatisch oder semiautomatisch erfolgen. Im ersten Fall kommunizieren die Fotostation und das Smartphone über eine bevorzugt drahtlose Datenverbindung miteinander, um festzustellen, ob sich das "richtige" Smartphone in der Umgebung der Fotostation befindet. Hierzu kann bspw. eine Nahfeldkommunikation (NFC) oder eine andere Kommunikationsart verwendet werden, die davon abhängig ist, dass sich das Smartphone in der Umgebung der Fotostation befindet. Auch ist es möglich, eine Kommunikationsart zu wählen, die es ermöglicht, den Abstand zwischen dem Smartphone und der Fotostation zu ermitteln, bspw. mittels der Empfangssignalstärke insbesondere an der Fotostation. Zum Bestimmen, ob das Smartphone, mit dem kommuniziert wird, das "richtige" ist, können Identifizierungsdaten verwendet werden. In einer Ausführungsform übermittelt der Server Identifizierungsdaten sowohl zu der Fotostation als auch zu dem Smartphone, wobei durch Austausch und Vergleich der Identifizierungsdaten bestimmt werden kann, ob das Smartphone, das sich in der Umgebung der Fotostation befindet, das "richtige" Smartphone ist. In einer Ausführungsform überträgt das Smartphone die vom Server erhaltenen Identifizierungsdaten an die Fotostation, die die von dem Smartphone erhaltenen Identifizierungsdaten mit den vom Server erhaltenen Identifizierungsdaten vergleicht, um zu bestimmen, ob das Smartphone, das "richtige" Smartphone ist, das heißt, ob es genau das Smartphone ist, mit dem die zu druckenden Fotos ausgewählt und die Druckparameter zugeordnet worden sind. Eine semiautomatische Bestimmung wird unten beschrieben.

In einer Ausführungsform umfasst die Fotostation einen Scanner zum Scannen eines Druckcodes und das System ist so konfiguriert, dass die Fotostation, das Smartphone und das Serversystem, wie folgt, gesteuert werden:
- das Serversystem erzeugt einen Druckcode und überträgt den Druckcode an das Smartphone, wonach das Smartphone den Druckcode anzeigt und die Person auffordert, das Smartphone mit dem angezeigten Druckcode vor den Scanner der Fotostation zu halten,
- das Serversystem ordnet den Druckcode den ausgewählten Fotos mit veränderter Auflösung und zugeordneten Druckparameters zu und übermittelt den Druckcode zusammen mit der Zuordnungsinformation, zu welchen ausgewählten Fotos mit veränderter Auflösung und zugeordneten Druckparametern der Druckcode gehört, an die Fotostation,
- die Fotostation vergleicht den gescannten Druckcode mit dem von dem Serversystem übermittelten Druckcode und druckt, wenn der Vergleich eine Übereinstimmung anzeigt, die Fotos gemäß den zugeordneten Druckparametern.

Auch der Druckcode ist bevorzugt ein zweidimensionaler Code, insbesondere ein QR-Code.

Hierdurch kann gewährleistet werden, dass die Fotos nur dann gedruckt werden, wenn sich das Smartphone, auf dem die Fotos gespeichert sind, und damit die richtige Person vor der Fotostation befinden. Dies verhindert also, dass eine Person gedruckte Fotos erhält, die eigentlich Fotos einer anderen Person sind.

In einer weiteren Ausführungsform ist das System so konfiguriert, dass die Fotostation, das Smartphone und das Serversystem, wie folgt, gesteuert werden:
- die Fotostation erzeugt einen Druckcode und zeigt diesen auf dem Display an,
- die Fotostation fordert das Smartphone über das Serversystem auf, eine Benutzeroberfläche zu erzeugen, die es der Person ermöglicht, dem auf dem Display gezeigten Druckcode in das Smartphone einzugeben, wonach das Smartphone die Benutzeroberfläche erzeugt und den eingegebenen Druckcode über das Serversystem an die Fotostation übermittelt,
- die Fotostation vergleicht den erzeugten Druckcode und den eingegebenen Druckcode, wobei, wenn der Vergleich eine Übereinstimmung anzeigt, die Fotostation die Fotos gemäß den zugeordneten Druckparametern druckt.

Da die Person den Druckcode auf dem Display der Fotostation liest und dann per Hand in das Smartphone eingibt, wobei dann der eingegebene Druckcode über das Serversystem an die Fotostation übermittelt wird, die den eingegebenen Druckcode mit dem ursprünglich erzeugten weiteren Druckcode vergleicht und, wenn der Vergleich eine Übereinstimmung anzeigt, die Fotos druckt, kann sichergestellt werden, dass die richtige Person die gedruckten Fotos erhält, ohne dass es notwendig ist, dass die Fotostation einen Scanner aufweist. Dies reduziert die technischen Anforderungen an die Fotostation weiter. Es ist bevorzugt, insbesondere wenn die Fotostation keinen Scanner aufweist, dass zum Übertragen des eingegebenen Druckcodes zu der Fotostation über das Serversystem eine permanente Datenverbindung verwendet wird. Die permanente Datenverbindung wird bevorzugt auch verwendet, um die ausgewählten Fotos mit veränderter Auflösung und die Zuordnungen von dem Serversystem zu der Fotostation zu übertragen, insbesondere wenn die Fotostation keinen Scanner aufweist. Wenn die Fotostation einen Scanner aufweist, kann das Scannen des Druckcodes verwendet werden, um das Übertragen der ausgewählten Fotos mit veränderter Auflösung und der Zuordnungen von dem Serversystem zu der Fotostation zu starten. Wenn die Fotostation keinen Scanner aufweist, kann dieses Herunterladen auf die Fotostation nicht durch dieses Scannen gestartet oder getriggert werden. Hierdurch könnten Verzögerungen entstehen. Um diese zu vermeiden oder zumindest zu reduzieren, kann die permanente Datenverbindung verwendet werden, wobei bevorzugt die ausgewählten Fotos mit veränderter Auflösung und die Zuordnungen unmittelbar nach dem Verändern der Auflösung auf die Fotostation übertragen werden.

Die permanente Datenverbindung ist insbesondere eine WebSocket-Verbindung. Mit permanenter Datenverwendung ist hier demnach bevorzugt gemeint, dass es nicht erforderlich ist, dass bei jeder Aktion des Serversystems eine vorhergehende Anfrage der Fotostation oder des Smartphones erforderlich ist. Nachdem die Datenverbindung einmal erzeugt worden ist, kann das Serversystem in dieser offenen Verbindung aktiv werden und beispielsweise neue Daten an die Fotostation und das Smartphone senden, ohne auf eine neue Verbindung der Fotostation oder des Smartphones zu warten. Die Verwendung einer derartigen permanenten Datenverbindung hat den Vorteil, dass der Datenaustausch zwischen dem Serversystem und dem Smartphone und dem Serversystem und der Fotostation schneller durchgeführt werden kann, insbesondere in Echtzeit. Die permanente Datenverbindung wird bevorzugt gelegentlich neu aufgebaut, insbesondere dann, wenn die Fotostation neu gestartet wird, was beispielsweise jeden Morgen sein kann.

Es ist weiterhin bevorzugt, dass das Serversystem einen ersten Server von einem ersten Typ zur Verbindung mit dem Smartphone, mehrere zweite Server von einem zweiten Typ zur Kommunikation mit der Fotostation und eine Übersichtseinheit, in der gespeichert ist, welcher zweite Server mit welcher Fotostation kommuniziert, umfasst, wobei das Serversystem so ausgestaltet ist, dass der erste Server die Übersichtseinheit fragt, mit welchem zweiten Server die Fotostation kommuniziert, auf dem die Fotos zu drucken sind, wonach der erste Server über den erfragten zweiten Server mit der Fotostation kommuniziert. Der erste Server ist insbesondere ein Webserver und die zweiten Server sind bevorzugt ausgebildet, Daten von dem Webserver an die Fotostation und von der Fotostation an den Webserver weiterzuleiten. Die zweiten Server könnten demnach auch als Weiterleitungsserver oder Vermittlungsserver bezeichnet werden. Bevorzugt läuft die oben genannte Webanwendung auf dem Webserver, wobei die Webanwendung derart ausgestaltet ist, dass der Webserver die Übersichtseinheit fragt, welcher zweite Server mit der Fotostation kommuniziert. Eine derartige Serverkonfiguration ist insbesondere dann hilfreich, wenn das Serversystem mit sehr vielen Fotostationen und damit auch mit sehr vielen Smartphones kommunizieren muss. Im vorliegenden Fall ist es beispielsweise möglich, dass das Serversystem mit 20.000 Fotostationen und 20.000 Smartphones kommunizieren muss. Die Anzahl der ersten und zweiten Server kann dabei immer noch relativ gering sein. Beispielsweise könnte ein Serversystem zwei Webserver und vier Weiterleitungsserver umfassen. Die beschriebene Serverkonfiguration ist zudem besonders vorteilhaft, wenn permanente Datenverbindungen zwischen den Fotostationen und dem Serversystem verwendet werden.

Es ist weiter bevorzugt, dass die Fotostation nach Ablauf einer vorgegebenen Zeit einen neuen Identifizierungscode erzeugt. Der Identifizierungscode ist demnach nur die vorgegebene Zeit, die insbesondere kleiner oder gleich 10 min und bevorzugt kleiner oder gleich 5 min ist, gültig. Dies kann zum Beispiel die Wahrscheinlichkeit eines Missbrauchs verringern. Durch diesen nicht-statischen Identifizierungscode, der damit auch als dynamischer Identifizierungscode bezeichnet werden könnte, kann gewährleistet werden, dass der Identifizierungscode nur zu dem Zeitpunkt verwendet werden kann, zu dem sich eine Person, die ein oder mehrere Fotos drucken möchte, an der oder in der Nähe der Fotostation befindet. Bei einer entsprechend kurzen Verfallszeit, die insbesondere kleiner oder gleich 5 min ist, ist es beispielsweise erschwert, den Identifizierungscode mit einer Kamera aufzunehmen und später zu Missbrauchszwecken zu verwenden. Ein grundsätzlich möglicher Missbrauch wäre, das System durch ein übermäßiges Hochladen von (Dummy-)Fotos zu überlasten und zum Absturz zu bringen. Der zeitlich variierende Identifizierungscode verhindert dies und erhöht daher die Systemsicherheit.

In einer bevorzugten Ausführungsform ist das System so konfiguriert, dass die Fotostation, das Smartphone und das Serversystem, wie folgt, gesteuert werden:
- die Fotostation übermittelt eine Kennzeichnungsinformation, die indikativ ist für die Fotostation, und die Druckparameter an das Serversystem, bevor die Fotostation den Identifizierungscode erzeugt,
- das Serversystem speichert die Kennzeichnungsinformation und die Druckparameter, ordnet der Kennzeichnungsinformation und den Druckparametern einen Schlüssel, der die Identifizierungsinformation ist, zu und übermittelt die Identifizierungsinformation an die Fotostation, wonach die Fotostation den Identifizierungscode erzeugt, in dem die Identifizierungsinformation codiert ist,
wobei, nach dem Übertragen der Fotos von dem Smartphone zu dem Serversystem, das Serversystem die übertragenen Fotos speichert, diese der Fotostation mittels der Identifizierungsinformation zuordnet, Miniaturansichten der übertragenen Fotos erzeugt und die Miniaturansichten und die Druckparameter auf das Smartphone überträgt.

In dieser Ausführungsform kann die Identifizierungsinformation auch als Schlüssel bezeichnet werden, wobei der Schlüssel der im Serversystem gespeicherten Kennzeichnungsinformation und den ebenfalls im Serversystem gespeicherten Druckparametern zugeordnet ist, so dass über den Schlüssel die Kennzeichnungsinformation und die Druckparameter erhalten werden können. Der Schlüssel ist daher mittelbar indikativ für die Kennzeichnungsinformation und damit indikativ für die Fotostation. Die Identifizierungsinformation, das heißt der Schlüssel, kann in dieser Ausführungsform insbesondere ein Session-Token sein, der von dem Serversystem generiert wird. Die Kennzeichnungsinformation gibt beispielsweise an, in welcher Drogerie oder in welchem Supermarkt die Fotostation steht. Die Kennzeichnungsinformation kann auch einfach eine ID der Fotostation oder eine andere Information sein, die indikativ ist für die Fotostation.

In dieser Ausführungsform erfolgt eine Verknüpfung der Fotostation, des Serversystems und des Smartphones untereinander also bevorzugt, indem die Fotostation die Kennzeichnungsinformation, die indikativ ist für die Fotostation, an das Serversystem übermittelt, das Serversystem der Kennzeichnungsinformation einen Schlüssel wie beispielsweise einen Session-Token zuordnet und diesen an die Fotostation übermittelt, die Fotostation einen Identifizierungscode erzeugt, der indikativ ist für den Schlüssel, und diesen zusammen mit einer Aufforderung an eine Person, diesen Identifizierungscode mittels der Kamera des Smartphones aufzunehmen, auf dem Display anzeigt, wobei, nach der Aufnahme des Identifizierungscodes, das Smartphone den Schlüssel an das Serversystem übermittelt.

In dieser Ausführungsform ist es zudem bevorzugt, dass, wenn die Fotostation automatisch erkennt, dass der Fotostation Druckverbrauchsmaterialien fehlen, die Druckparameter entsprechend angepasst und die angepassten Druckparameter an das Serversystem übermittelt werden.

Zudem ist es in dieser Ausführungsform bevorzugt, falls ein dynamischer Identifizierungscode verwendet wird, dass das Serversystem nach Ablauf einer vorgegebenen Zeit einen neuen Schlüssel, insbesondere einen neuen Session-Token, an die Fotostation überträgt, wonach die Fotostation einen neuen Identifizierungscode erzeugt. Der Identifizierungscode ist demnach, wie oben ausgeführt, nur die vorgegebene Zeit, die insbesondere kleiner oder gleich 10 min und bevorzugt kleiner oder gleich 5 min ist, gültig. Dies kann zum Beispiel die Wahrscheinlichkeit eines Missbrauchs verringern.

In einer weiteren Ausführungsform ist das System so konfiguriert, dass die Fotostation, das Smartphone und das Serversystem so gesteuert werden, dass die Fotostation den Identifizierungscode derart erzeugt, dass er auch indikativ ist für die Druckparameter, wobei das Smartphone die Druckparameter von dem Identifizierungscode extrahiert.

In dieser Ausführungsform erfolgt eine Verknüpfung der Fotostation, des Serversystems und des Smartphones untereinander, indem die Fotostation den Identifizierungscode erzeugt, der indikativ ist für die Fotostation, diesen Identifizierungscode auf dem Display der Fotostation zeigt, die Person den Identifizierungscode mit dem Smartphone liest und der gelesene Identifizierungscode schließlich von dem Smartphone an das Serversystem übertragen wird, wobei hier vor dem Erzeugen des Identifizierungscodes keine Kennzeichnungsinformation von der Fotostation zu dem Serversystem geschickt worden ist, das Serversystem keinen Schlüssel wie einen Session-Token an die Fotostation geschickt hat und der Identifizierungscode daher als Identifizierungsinformation beispielsweise keinen Session-Token codiert. Vielmehr kann die Identifizierungsinformation in dieser Ausführungsform der Kennzeichnungsinformation der vorherigen Ausführungsform entsprechen.

Die oben genannte Aufgabe wird auch durch eine Fotostation zum Drucken von Fotos, die auf einem Smartphone mit Kamera gespeichert sind, insbesondere in einem SB-Bereich beispielsweise einer Drogerie, gelöst, wobei die Fotostation ausgebildet ist, als Fotostation des Systems gemäß einem der Ansprüche 1 bis 11 verwendet zu werden.

Die oben genannte Aufgabe wird zudem durch ein Serversystem zur Kommunikation mit a) einer Fotostation zum Drucken von Fotos, die auf einem Smartphone mit Kamera gespeichert sind, insbesondere in einem SB-Bereich beispielsweise einer Drogerie, und b) dem Smartphone gelöst, wobei das Serversystem ausgebildet ist, als Serversystem des Systems gemäß einem der Ansprüche 1 bis 11 verwendet zu werden.

Des Weiteren wird die oben genannte Aufgabe durch ein Verfahren zum Drucken von Fotos, die auf einem Smartphone mit Kamera gespeichert sind, an einer Fotostation, insbesondere in einem SB-Bereich beispielsweise einer Drogerie, mittels eines Systems gemäß einem der Ansprüche 1 bis 11 gelöst, wobei das Verfahren umfasst:
- Erzeugen eines Identifizierungscodes durch die Fotostation, in dem eine Identifizierungsinformation codiert ist, die indikativ ist für die Fotostation,
- Anzeigen des Identifizierungscodes auf dem Display zusammen mit einer Aufforderung an eine Person, diesen Identifizierungscode mittels der Kamera des Smartphones aufzunehmen, auf dem Display der Fotostation,
- nach der Aufnahme des Identifizierungscodes, Übermitteln des Identifizierungscodes oder der Identifizierungsinformation, nachdem das Smartphone diese aus dem Identifizierungscode extrahiert hat, von dem Smartphone an das Serversystem und Erzeugen einer grafischen Benutzeroberfläche, die es der Person ermöglicht, von den gespeicherten Fotos zu druckende Fotos auszuwählen, wonach die ausgewählten Fotos von dem Smartphone zu dem Serversystem übertragen werden, wo die übertragenen Fotos gespeichert werden, wobei das Serversystem die gespeicherten Fotos mittels der Identifizierungsinformation der Fotostation zuordnet,
- Erzeugen von Miniaturansichten der übertragenen Fotos durch das Serversystem und Übertragen der Miniaturansichten von dem Serversystem auf das Smartphone,
- Erzeugen einer grafischen Benutzeroberfläche auf dem Smartphone, die die übertragenen Miniaturansichten anzeigt und es der Person ermöglicht, jeder Miniaturansicht und damit jedem ausgewählten Foto ein oder mehrere Druckparameter zuzuordnen, um Zuordnungen zu erzeugen, wobei diese Zuordnungen jedem ausgewählten Foto zumindest eine Druckauflösung zuordnen, wobei die Druckparameter angeben, auf welche Art die Fotostation die Fotos drucken kann,
- Übermitteln der Zuordnungen von dem Smartphone an das Serversystem, das dann die Auflösungen der ausgewählten Fotos derart modifiziert, dass sie der jeweiligen Druckauflösung entsprechen, wonach das Serversystem die ausgewählten Fotos mit veränderter Auflösung und die Zuordnungen zu der Fotostation überträgt, die die ausgewählten Fotos mit veränderter Auflösung gemäß den in den Zuordnungen enthaltenen Druckparametern druckt.

Außerdem wird die oben genannte Aufgabe durch ein Computerprogramm zum Drucken von Fotos, die auf einem Smartphone mit Kamera gespeichert sind, an einer Fotostation, insbesondere in einem SB-Bereich beispielsweise einer Drogerie, gelöst, wobei das Computerprogramm Programmcodemittel aufweist, die angepasst sind, ein System zum Drucken von Fotos an einer Fotostation gemäß einem der Ansprüche 1 bis 11 und das Smartphone derart zu steuern, dass das Verfahren zum Drucken von Fotos an einer Fotostation gemäß Anspruch 14 durchgeführt wird, wenn das Computerprogramm auf dem System und dem Smartphone ausgeführt wird.

Das Computerprogramm umfasst bevorzugt mehrere Unter-Computerprogramme, die interagieren, um die Verfahrensschritte durchzuführen. So umfasst das Computerprogramm beispielsweise bevorzugt die oben beschriebene Webanwendung, die bevorzugt auf dem Smartphone und dem Serversystem ausgeführt wird. Zudem kann das Computerprogramm weitere Unterprogramme aufweisen, die auf der Fotostation und beispielsweise auf weiteren Teilen des Serversystems ausgeführt werden.

Es sollte verstanden werden, dass das System zum Drucken von Fotos nach Anspruch 1, das Verfahren zum Drucken von Fotos nach Anspruch 14 und das Computerprogramm zum Drucken von Fotos nach Anspruch 15 ähnliche oder identische Ausführungsformen aufweisen, wie sie insbesondere in den abhängigen Ansprüchen definiert sind.

Im Weiteren werden Ausführungsformen der Erfindung unter Bezugnahme auf nachfolgende Figuren beschrieben, wobei
- Fig.1: schematisch und exemplarisch eine Person mit einem Smartphone vor einer bekannten Fotostation zum Drucken von Fotos zeigt,
- Fig. 2: schematisch und exemplarisch eine Ausführungsform eines Systems zum Drucken von Fotos durch eine Fotostation zusammen mit dem Smartphone zeigt,
- Fig. 3: schematisch und exemplarisch Komponenten einer Ausführungsform der Fotostation zeigt,
- Fig. 4: schematisch und exemplarisch ein Aufnehmen eines von der Fotostation erzeugten Identifizierungscodes mittels einer Kamera des Smartphone zeigt,
- Fig. 5: ein Ablaufdiagramm zeigt, das eine Ausführungsform eines Verfahrens zum Drucken von Fotos, die auf einem Smartphone mit einer Kamera gespeichert sind, durch eine Fotostation illustriert,
- Fig. 6: schematisch und exemplarisch eine weitere Ausführungsform eines Systems zum Drucken von Fotos, die auf einem Smartphone mit Kamera gespeichert sind, an einer Fotostation zusammen mit dem Smartphone zeigt,
- Fig. 7: schematisch und exemplarisch eine Ausführungsform eines Serversystems illustriert, und
- Fig. 8: ein Ablaufdiagramm zeigt, das eine weitere Ausführungsform eines Verfahrens zum Drucken von Fotos, die auf einem Smartphone mit Kamera gespeichert sind, an einer Fotostation illustriert.

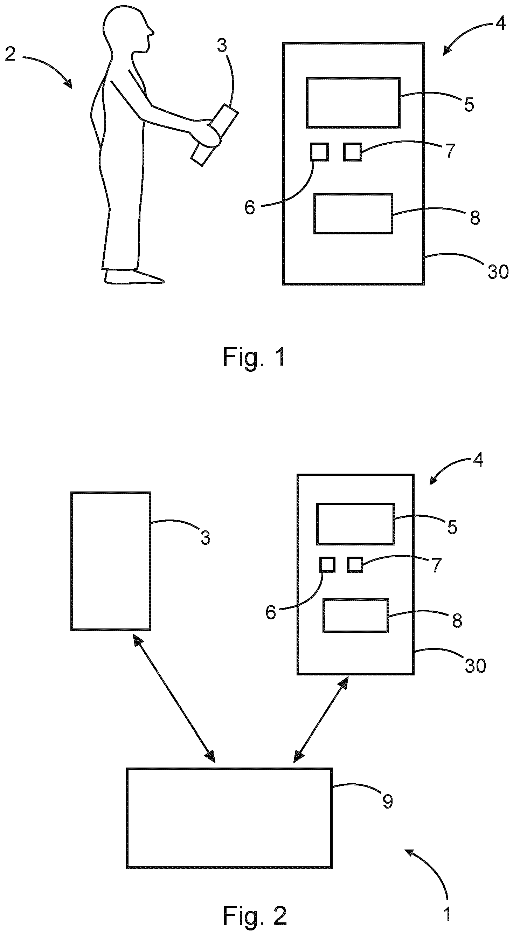

Fig. 1 zeigt schematisch und beispielhaft eine Person 2 mit einem Smartphone 3, die vor einer Fotostation 4 steht. Auf dem Smartphone 3 sind Fotos gespeichert, die die Person 2 mittels der Fotostation 4 ausdrucken möchte. Die Fotostation 4 umfasst ein Display 5, einen Scanner 6, Anschlussmöglichkeiten 7 für das Smartphone 3, insbesondere Verbindungskabel, und eine Druckausgabe 8, an der die Person 2 die gedruckten Fotos entnehmen kann. Innerhalb des Gehäuses 30 der Fotostation 4 befinden sich zudem mehrere Thermosublimationsdrucker, um beispielsweise ein Bedrucken von Aufklebern und auch ein Erzeugen "normaler" Fotos zu ermöglichen, und ein Steuerungscomputer, der das Display 5, den Scanner 6 und die Drucker steuert. Der Steuerungscomputer kann über die Anschlussmöglichkeiten 7 mit dem Smartphone 3 verbunden werden, um die Fotos, die auf dem Smartphone 3 gespeichert sind, von dem Smartphone 3 auf die Fotostation 4 zu übertragen. In diesem Beispiel ist das Display 5 zudem ein Touchscreen, auf dem die auf die Fotostation 4 übertragenen Fotos angezeigt werden können, so dass die Person 2 auf diesem Touchscreen 5 zu druckende Fotos auswählen kann und auch bestimmen kann, wie die ausgewählten Fotos gedruckt werden sollen. Die Person 2 kann beispielsweise bestimmen, ob die ausgewählten Fotos als normale Fotos gedruckt werden sollten oder als Aufkleber.

In einer Ausführungsform der Erfindung ist ein derartiger bekannter Prozess zum Ausdrucken von auf einem Smartphone gespeicherter Fotos an einer Fotostation so modifiziert, dass die Person 2 die Fotostation 4 nicht mehr berühren muss. Hierzu ist in dieser Ausführungsform ein System 1 zum Drucken von Fotos an einer Fotostation 4 gemäß Fig. 2 vorgesehen. Das in Fig. 2 schematisch und beispielhaft dargestellte System 1 zum Drucken von Fotos an einer Fotostation 4 umfasst die Fotostation 4 und ein Serversystem 9, wobei das Smartphone 3 mit dem Serversystem 9 verbindbar ist und das Serversystem 9 mit der Fotostation 4 verbunden ist. In dieser Ausführungsform gibt es keine direkte Verbindung zwischen dem Smartphone 3 und der Fotostation 4.

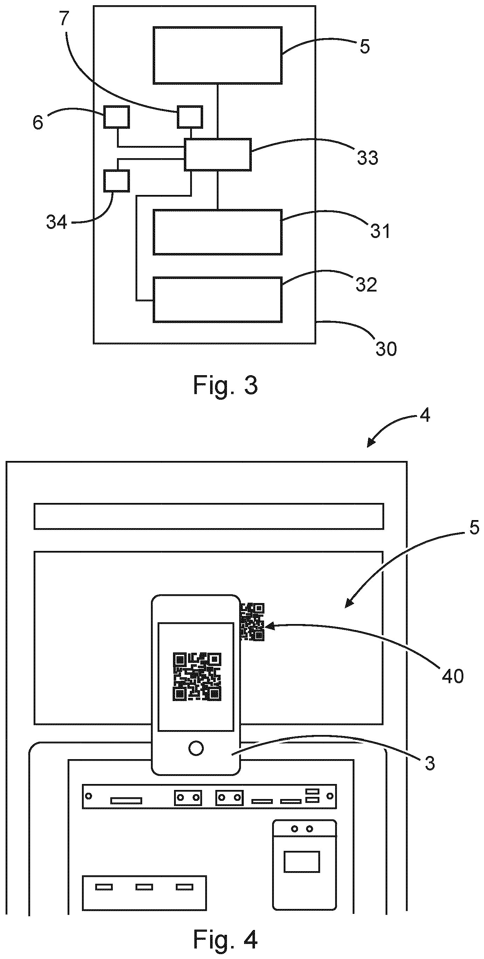

Wie in Fig. 3 schematisch und beispielhaft dargestellt ist, befinden sich innerhalb des Gehäuses 30 der Fotostation 4 zwei Drucker 31, 32 zum Drucken von Aufklebern und von normalen Fotos und ein Steuerungscomputer 33 zum Steuern der Drucker 31, 32, des Displays 5 und des Scanners 6. Der Steuerungscomputer 33 kann mit dem Serversystem 9 über einen Datenverbindungsanschluss 34 verbunden werden.

Die Fotostation 4 ist angepasst, eine Kennzeichnungsinformation, die indikativ ist für die Fotostation 4, und Druckparameter, die angeben, auf welche Art die Fotostation 4 die Fotos drucken kann, an das Serversystem 9 zu übermitteln, wobei die Druckparameter zumindest eine Druckauflösung umfassen. Das Serversystem 9 ist angepasst, die Kennzeichnungsinformation und die Druckparameter zu speichern, der Kennzeichnungsinformation und den Druckparametern einen Schlüssel, der in dieser Ausführungsform ein Session-Token ist, zuzuordnen und den Schlüssel an die Fotostation 4 zu übermitteln. Die Fotostation 4 ist angepasst, einen Identifizierungscode zu erzeugen, der indikativ ist für den Schlüssel, und diesen zusammen mit einer Aufforderung an die Person 2, diesen Identifizierungscode mittels der Kamera des Smartphones 3 aufzunehmen, auf dem Display 5 anzuzeigen. Die Fotostation 4 ist in dieser Ausführungsform angepasst, als Identifizierungscode einen QR-Code 40 zu erzeugen. Die Druckparameter können auch, neben der Druckauflösung, beispielsweise ein Druckformat und/oder ein Druckmaterial umfassen.

Der Schlüssel kann auch als Identifizierungsinformation bezeichnet werden, wobei, wie oben ausgeführt, der Schlüssel der im Serversystem gespeicherten Kennzeichnungsinformation und den ebenfalls im Serversystem gespeicherten Druckparametern zugeordnet ist, so dass über den Schlüssel die Kennzeichnungsinformation und die Druckparameter erhalten werden können. Der Schlüssel ist daher mittelbar indikativ für die Kennzeichnungsinformation und damit indikativ für die Fotostation 4.

Der QR-Code identifiziert eindeutig die Fotostation 4, so dass die Fotostation 4 von anderen mit dem Serversystem 9 verbundenen Fotostationen in beispielsweise ganz Europa unterschieden werden kann. Dieser QR-Code 40 wird, wie oben beschrieben, auf dem Display 5 der Fotostation 4 angezeigt, wonach die Person 2 diesen mit der Kamera des Smartphones 3 aufnehmen kann, wie es beispielhaft und schematisch in Fig. 4 gezeigt ist.

Es wird ein dynamischer Identifizierungscode (QR-Code) verwendet, wobei das Serversystem 9 nach Ablauf einer vorgegebenen Zeit einen neuen Schlüssel, insbesondere einen neuen Session-Token, an die Fotostation 4 überträgt, wonach die Fotostation 4 einen neuen Identifizierungscode erzeugt. Der Identifizierungscode ist demnach nur die vorgegebene Zeit, die insbesondere kleiner oder gleich 10 min und bevorzugt kleiner oder gleich 5 min ist, gültig.

Das Smartphone 3 initiiert dann eine Webanwendung, die auch als Webapp-Session bezeichnet werden könnte, mittels des Browsers des Smartphones 3, so dass eine Webanwendung erzeugt wird, die auf dem Smartphone 3 und dem Serversystem 9 ausgeführt wird. Hierdurch wird auch die zweite Datenverbindung zwischen dem Smartphone 3 und dem Serversystem 9 erzeugt. Die Webanwendung ermöglicht, dass auf dem Smartphone von den gespeicherten Fotos die Fotos von der Person 2 ausgewählt werden, die gedruckt werden sollen. Hierzu kann die Webanwendung beispielsweise auch eine bereits auf dem Smartphone vorhandene App verwenden, die die gespeicherten Fotos anzeigt. Danach werden mittels der Webanwendung die ausgewählten, zu druckenden Fotos von dem Smartphone 3 an das Serversystem 9 über die zweite Datenverbindung übertragen. Dieses Übertragen der zu druckenden Fotos erfolgt unmittelbar, nachdem diese Fotos ausgewählt worden sind, um den Gesamtprozess nicht durch das Hochladen der Fotos auf das Serversystem 9 zu verlangsamen. Das Serversystem 9 speichert die empfangenen Fotos und erzeugt Miniaturansichten der empfangenen Fotos, das heißt sogenannte Thumbnails.

Nachdem das Serversystem 9 die Miniaturansichten erzeugt hat, werden diese mittels der zweiten Datenverbindung von dem Serversystem 9 an das Smartphone 3 übertragen, wobei die Webanwendung ausgebildet ist, die übertragenen Miniaturansichten anzuzeigen und es der Person 2 zu ermöglichen, jeder Miniaturansicht Druckparameter zuzuordnen, die angeben, auf welcher Art die ausgewählten Fotos von der Fotostation 4 gedruckt werden sollten. In diesem Ausführungsbeispiel geben die Druckparameter insbesondere an, ob das Foto auf einem Aufkleber oder auf Fotopapier gedruckt werden sollte. Die Druckparameter können auch weitere Eigenschaften der schließlich gedruckten Fotos definieren, beispielsweise ob die gedruckten Fotos matt oder glänzend sein sollten.

In dieser Ausführungsform ist die Fotostation 4 konfiguriert, automatisch zu erkennen, ob der Fotostation 4 Druckverbrauchsmaterialien fehlen, und, falls dies der Fall ist, die Druckparameter entsprechend anzupassen und die angepassten Druckparameter an das Serversystem 9 zu übermitteln. Wenn beispielsweise keine Blankoaufkleber mehr in der Fotostation 4 vorhanden sind, können die Druckparameter so angepasst werden, dass sie nur noch die Möglichkeit angeben, auf normalem Fotopapier zu drucken.

Die Zuordnungen werden von dem Smartphone 3 zu dem Serversystem 9 übertragen, wonach das Serversystem 9 die Auflösungen der ausgewählten Bilder derart verändert, dass sie einer Druckauflösung entsprechen. Die Druckauflösung wiederum entspricht der Auflösung, mit der die Fotos schließlich gedruckt werden. Da anzunehmen ist, dass die Druckauflösung geringer ist als die Auflösung der ursprünglich gespeicherten Fotos, reduziert das Serversystem die Auflösung und damit die Datenmenge der ausgewählten zu druckenden Fotos. Das Serversystem erzeugt dann einen weiteren Code, der in dieser Ausführungsform ein QR-Code ist und auch als Druckcode bezeichnet werden könnte, und übertragt den Druckcode an das Smartphone 3, das den Druckcode auf dem Smartphone anzeigt. Der Druckcode wird zudem zusammen mit den zu druckenden Fotos geringerer Auflösung von dem Serversystem 9 an die Fotostation 4 übertragen. Auf dem Display des Smartphones 3 und/oder auf dem Display 5 der Fotostation 4 wird dann die Person 2 aufgefordert, den Druckcode, der auf dem Display des Smartphones 3 angezeigt wird, vor den Scanner 6 der Fotostation 4 zu halten, wonach der Scanner 6 den Druckcode scannt. Die Fotostation 4, das heißt der Steuerungscomputer 33, vergleicht dann den eingescannten Druckcode mit dem Druckcode, den die Fotostation 4 von dem Serversystem 9 erhalten hat, wobei, wenn der Vergleich eine Übereinstimmung anzeigt, die Fotostation 4 die Fotos gemäß den zugeordneten Druckparametern druckt. Die Druckparameter hat dabei die Fotostation 4 zusammen mit den niedriger aufgelösten Fotos von dem Serversystem 9 erhalten.

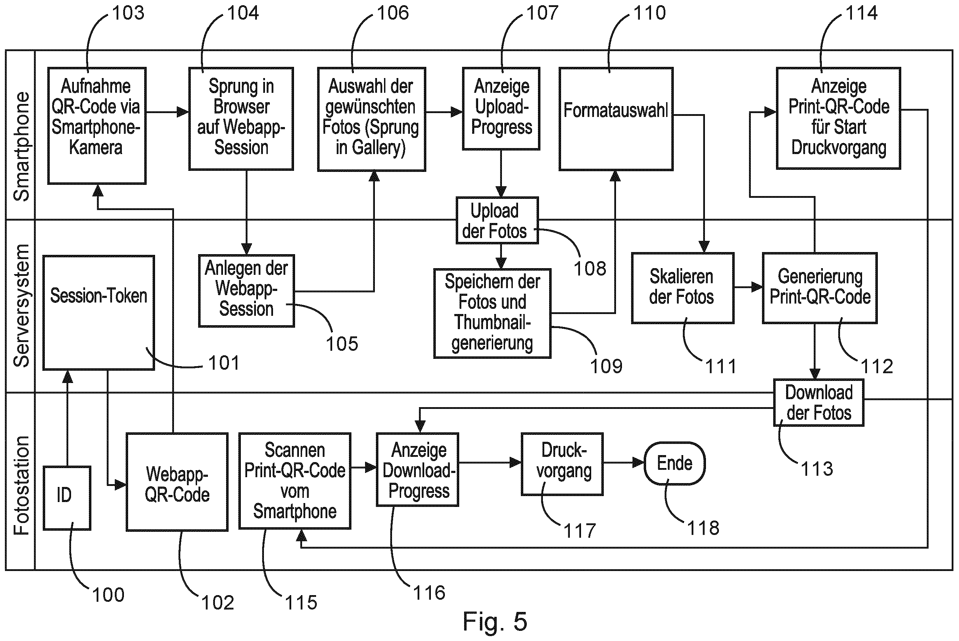

Fig. 5 zeigt beispielhaft eine Ausführungsform eines Verfahrens zum Drucken von Fotos an der Fotostation 4 mittels des in Fig. 2 gezeigten Systems. In diesem Verfahren übermittelt die Fotostation 4 eine Kennzeichnungsinformation, die indikativ ist für die Fotostation 4, und Druckparameter, die angeben, auf welche Art die Fotostation die Fotos drucken kann, an das Serversystem 9. Die Kennzeichnungsinformation kann beispielsweise den Ort der Fotostation 4 angegeben und diese dadurch identifizieren. Dieses Übermitteln erfolgt in Schritt 100. In Schritt 101 speichert das Serversystem 9 die Kennzeichnungsinformation und die Druckparameter, generiert einen Sitzungsbezeichner, das heißt als Schlüssel einen Session-Token, ordnet diesen der Kennzeichnungsinformation und den Druckparametern zu und übermittelt den Sitzungsbezeichner an die Fotostation 4.

In Schritt 102 erzeugt die Fotostation 4 einen QR-Code und zeigt diesen in einem Bildschirmschoner des Displays 5 der Fotostation 4. Der QR-Code beinhaltet Informationen bezüglich des Sitzungsbezeichners und einer Internetadresse des Serversystem 9.

Auf dem Bildschirmschoner ist neben dem QR-Code eine Aufforderung für die Person 2 gezeigt, den QR-Code mit einer Kamera des Smartphones 3 zu scannen (Schritt 103). Das Smartphone 3 extrahiert aus dem QR-Code insbesondere die Internetadresse des Serversystems 9, wonach eine Webanwendung zwischen dem Smartphone 3 und dem Serversystem 9 gestartet wird (Schritte 104 und 105). In Schritt 106 stellt die Webanwendung eine Benutzeroberfläche bereit, die es der Person 2 ermöglicht, die Fotos auszuwählen, die gedruckt werden sollen. Hierzu kann die Webanwendung beispielsweise eine bereits vorhandene App auf dem Smartphone 3 verwenden, mit der die gespeicherten Fotos angezeigt werden können.

Unmittelbar nach der Auswahl der zu druckenden Fotos werden die ausgewählten Fotos auf das Serversystem 9 geladen, wobei die Webanwendung den Fortschritt dieses Hochladens auf dem Smartphone 3 der Person 2 anzeigt (Schritte 107 und 108). In Schritt 109 werden die heruntergeladenen Fotos auf dem Serversystem 9 gespeichert und das Serversystem 9 erzeugt Miniaturansichten der gespeicherten Fotos. Das heißt, es werden sogenannte Thumbnails generiert. Die erzeugten Miniaturansichten werden dann von dem Serversystem 9 auf das Smartphone 3 übertragen, wobei die Webanwendung es der Person 2 ermöglicht, den Miniaturansichten, die von der Webanwendung auf dem Smartphone 3 gezeigt werden, Druckparameter zuzuordnen. In diesem Ausführungsbeispiel beziehen sich die Druckparameter unter anderem auf das Format des zu druckenden Fotos, insbesondere auf das Seitenverhältnis und den absoluten Längen- und Breitenabmessungen, und beispielsweise darauf, ob die Fotos auf Aufklebern oder normalem Fotopapier gedruckt werden sollten. Die Webanwendung kann ausgebildet sein, für jedes ausgewählte Foto ein Format vorzuschlagen, wobei die Webanwendung es der Person 2 ermöglicht, die vorgeschlagene Formatauswahl zu ändern (Schritt 110). Die Zuordnungen der Druckparameter zu den Miniaturansichten und damit zu den zu druckenden Fotos, insbesondere die Formatauswahl für die zu druckenden Fotos, wird dann von dem Smartphone 3 an das Serversystem 9 übertragen, wonach das Serversystem 9 die Auflösung der zu druckenden Fotos an die Druckauflösung anpasst. Dieses Anpassen der Auflösung könnte auch als "Skalierung" bezeichnet werden (Schritt 111).

Nachdem die Fotos skaliert worden sind, erzeugt das Serversystem 9 einen weiteren QR-Code, der im Weiteren und oben auch als Druck- oder Printcode bezeichnet wird (Schritt 112). Der erzeugte Druckcode wird dann zusammen mit den skalierten Fotos und den in Schritt 110 ausgewählten Formaten auf die Fotostation 4 heruntergeladen (Schritt 113). Zudem wird der Druckcode von dem Serversystem 9 mittels der Webanwendung an das Smartphone 3 übertragen, das den Druckcode auf seinem Display anzeigt (Schritt 114). Die Webanwendung fordert dann auch die Person 2 auf, den Druckcode vor den Scanner 6 der Fotostation 4 zu halten, so dass der Scanner 6 der Fotostation 4 den Druckcode vom Smartphone 3 scannen kann (Schritt 115).

Die Fotostation 4 vergleicht den von dem Serversystem 9 erhaltenen Druckcode mit dem mittels des Scanners 6 gescannten Druckcode und, falls beide Druckcodes gleich sind, zeigt auf dem Display 5 den Fortschritt des Herunterladens an (Schritt 116), schneidet die skalierten Fotos gemäß den ausgewählten Formaten digital zu und beginnt den Druckvorgang der skalierten und digital zugeschnittenen Fotos (Schritt 117). Nachdem die Fotos gedruckt worden sind, befinden sie sich im Ausgabebereich 8 der Fotostation 4 und das Verfahren endet (Schritt 118).

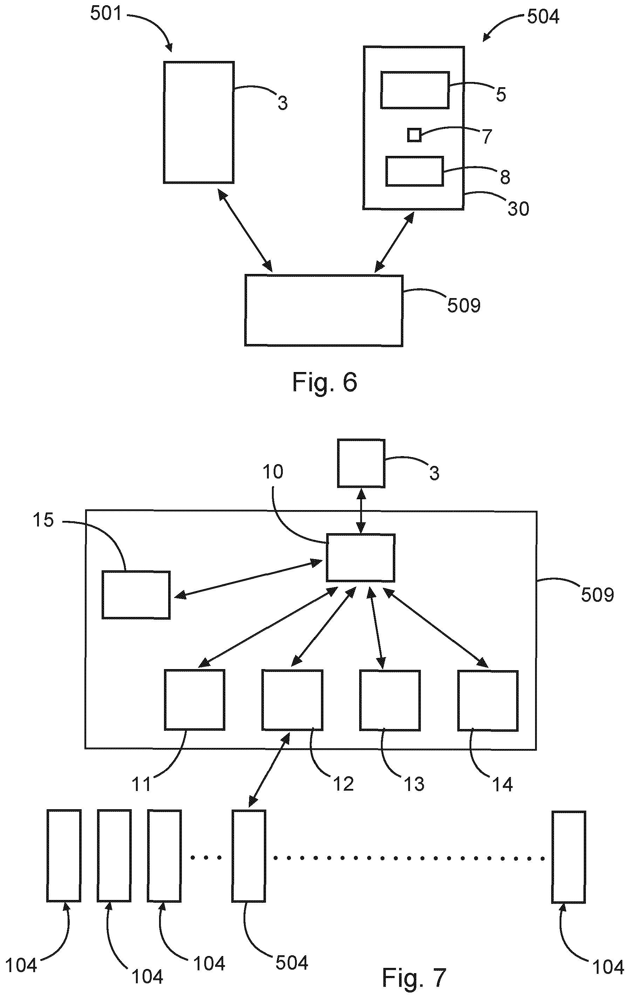

Das digitale Zuschneiden der Fotos erfolgt durch die Fotostation und nicht durch das Serversystem, weil hierdurch die Fotostation das digitalen Zuschneiden in Abhängigkeit von dem Druckerzustand durchführen kann, wodurch ein verbessertes digitales Zuschneiden ermöglicht wird. Der Steuerungscomputer der Fotostation oder ein anderer Rechner der Fotostation ist ausgebildet, diese und andere Bildverarbeitungsschritte durchzuführen. Die Fotostation ist insbesondere ausgebildet, vor dem digitalen Zuschneiden einen Bildqualität-Verbesserungsalgorithmus auf die Fotos anzuwenden. Der Bild-Verbesserungsalgorithmus führt eine Farbkorrektur und/oder eine Schattenkorrektur durch, wobei der Bild-Verbesserungsalgorithmus vor dem digitalen Zuschneiden auf die Fotos angewendet wird. Hierdurch kann der Bild-Verbesserungsalgorithmus einen größeren Teil, insbesondere das gesamte Foto, bei der Bildverbesserung berücksichtigen, was zu einer verbesserten Bildqualität der digitalen Fotos und damit auch der schließlich gedruckten finalen Fotos führt. Fig. 6 zeigt beispielhaft und schematisch eine weitere Ausführungsform eines Systems zum Drucken von Fotos an einer Fotostation. Auch dieses System 501 umfasst ein Serversystem 509 und eine Fotostation 504. Die Fotostation 504, die in Fig. 6 gezeigt ist, unterscheidet sich von der Fotostation 4, die beispielsweise in Fig. 2 gezeigt ist, dadurch, dass die Fotostation 504 keinen Scanner 6 aufweist. Zudem weist das Serversystem 509 eine bestimmte Struktur auf, die weiter unten ausgeführt wird.

Auch die Fotostation 504 übermittelt eine Kennzeichnungsinformation, die indikativ ist für die Fotostation 504, und Druckparameter, die angeben, auf welche Art die Fotostation 504 die Fotos drucken kann, an das Serversystem 509, wobei die Druckparameter zumindest eine Druckauflösung umfassen. Des Weiteren speichert auch das Serversystem 509 die Kennzeichnungsinformation und die Druckparameter, ordnet der Kennzeichnungsinformation und den Druckparametern einen Schlüssel (Session-Token) zu und übermittelt den Schlüssel an die Fotostation 504. Die Fotostation 504 erzeugt einen QR-Code, der indikativ ist für den Schlüssel und für eine Webanwendung, wobei dieser QR-Code auf dem Display 5 der Fotostation 4 gezeigt wird.

Zudem wird auch bei diesem System der QR-Code mittels der Kamera des Smartphones 3 gelesen, woraufhin die Webanwendung auf dem Smartphone 3 und dem Serversystem 509 startet. Zudem erzeugt auch bei diesem System 501 das Smartphone 3, insbesondere die Webanwendung, eine Benutzeroberfläche, die es der Person 2 ermöglicht, unter den auf dem Smartphone 3 gespeicherten Fotos zu druckende Fotos auszuwählen, die dann von dem Smartphone 3 auf das Serversystem 509 übertragen werden. Das Serversystem 509 speichert die übertragenen Fotos und erstellt Miniaturansichten, die dann von dem Serversystem 509 zu dem Smartphone 3 übertragen werden. Die Webanwendung erzeugt dann auf dem Smartphone 3 eine Benutzeroberfläche, die die übertragenen Miniaturansichten anzeigt und es der Person 2 ermöglicht, jeder Miniaturansicht Druckparameter, insbesondere Formatgrößen, zuzuordnen, um derartige Zuordnungen zu erzeugen. Diese Zuordnungen werden dann von dem Smartphone 3 zu dem Serversystem 509 übermittelt, woraufhin das Serversystem 509 die Auflösungen der ausgewählten Bilder derart verändert, dass sie einer Druckauflösung entsprechen. Die ausgewählten Fotos mit veränderter Auflösung und die Zuordnungen werden dann von dem Serversystem 509 zu der Fotostation 504 übertragen, wobei die Fotostation die übertragenen Fotos in Abhängigkeit von dem Druckerstatus digital entsprechend dem jeweils ausgewählten Format zuschneidet. Dies entspricht im Wesentlichen den Vorgängen, die oben unter Bezugnahme auf das System 1 beschrieben worden sind.

Das System 501 unterscheidet sich von dem System 504 aber dadurch, dass das Serversystem 509 einen weiteren Code erzeugen kann, der beispielsweise eine mehrstellige alphanumerische Zeichenfolge ist, und den weiteren Code an die Fotostation 504 übertragen kann, wonach die Fotostation 504 den übertragenen Code auf dem Display 5 anzeigen kann. Die Person 2 kann dann über das Display 5 der Fotostation 504 und/oder dem Display des Smartphones 3 aufgefordert werden, den Code manuell in das Smartphone 3 einzugeben, wonach das Smartphone 3 den angegebenen Code über das Serversystem 509 an die Fotostation 504 übertragen kann. Die Fotostation 504 kann dann den von dem Serversystem 509 erzeugten weiteren Code mit dem eingegebenen Code vergleichen, wobei, wenn der Vergleich eine Übereinstimmung anzeigt, die Fotostation 504 die Fotos drucken kann. Zum Übertragen des angegebenen Codes von dem Smartphone 3 zu der Fotostation 504 über das Serversystem 509 wird eine Websocket und damit eine permanente Datenverbindung verwendet.

Das Serversystem 509 ist schematisch und beispielhaft in Fig. 7 dargestellt. Es umfasst einen ersten Server 10 von einem ersten Typ zur Verbindung mit dem Smartphone 3, wobei dieser erster Server 10 ein Webserver ist. Zudem umfasst das Serversystem 509 mehrere zweite Server 11...14 von einem zweiten Typ zur Kommunikation mit einer großen Anzahl von Fotostationen 104, 504, beispielsweise zur Kommunikation mit 20.000 Fotostationen. Diese zweiten Server 11...14 von einem zweiten Typ dienen im Wesentlichen zur Weiterleitung von Daten und können daher auch als Weiterleitungsserver bezeichnet werden.

In diesem Ausführungsbeispiel umfasst das Serversystem 509 einen Webserver 10 und vier Weiterleitungsserver 11...14. In einer anderen Ausführungsform kann die Anzahl der Webserver 10 und der Weiterleitungsserver 11...14 natürlich eine andere sein.

Das Serversystem 509 umfasst zudem eine Übersichtseinheit 15, in der gespeichert ist, welcher der Weiterleitungsserver 11...14 mit welcher der beispielsweise 20.000 Fotostationen 104, 504 kommuniziert. Die Webanwendung wird auf dem Webserver 10 durchgeführt, wobei zur Kommunikation zwischen dem Serversystem 509 und einer der Fotostationen 104, 504, insbesondere der Fotostation 504, die Webanwendung jeweils fragt, welcher der Weiterleitungsserver 11...14 mit der jeweiligen Fotostation 504 kommuniziert, wonach der Webserver 10 über diesen Weiterleitungsserver 12, das heißt über diesen Kommunikationsweg mit der jeweiligen Fotostation 504 kommuniziert. In diesem Ausführungsbeispiel findet der Datenaustausch zwischen dem Webserver 10 und der Fotostation 504 über den Weiterleitungsserver 12 statt. Es wird hierbei angemerkt, dass auch bei dieser Struktur das Übertragen der ausgewählten Fotos mit veränderter Auflösung und der Zuordnungen, das heißt insbesondere der von der Person 2 festgelegten Formatgrößen, von dem Serversystem 509 an die Fotostation 504 über eine Websocketverbindung, das heißt über eine permanente Datenverbindung, erfolgt.

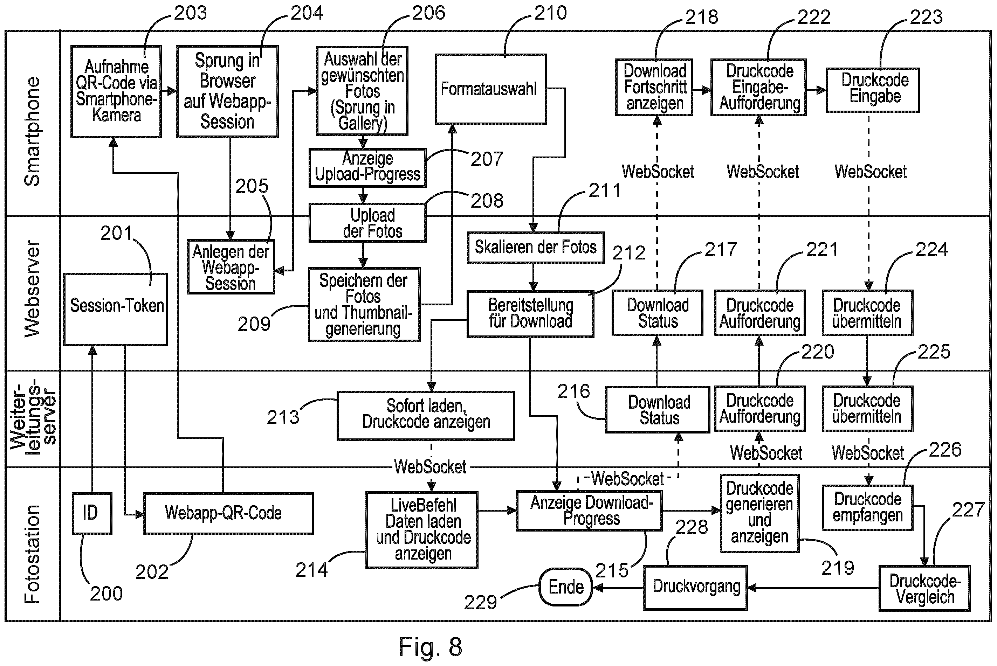

Im Folgenden wird ein Verfahren zum Drucken von Fotos an einer Fotostation 504 mit dem oben beschriebenen System 501 mit Bezug auf Fig. 8 beschrieben. Das heißt, das Verfahren wird insbesondere verwendet, wenn die Fotostation keinen Scanner aufweist.

Die in Fig. 8 gezeigten Schritte 200 bis 211 entsprechen den Schritten 100 bis 111, die oben unter Bezugnahme auf Fig. 5 beschrieben worden sind, wobei die Schritte 201, 205, 209 und 211 auf dem Webserver 10 des Serversystems 509 ausgeführt werden.

In Schritt 212 stellt der Webserver 10 einen Datensatz zusammen, der die skalierten zu druckenden Fotos und die Zuordnungen, das heißt insbesondere die jeweiligen Formatgrößen, umfasst.

Dieser Datensatz wird dann über den Weiterleitungsserver 12 an die Fotostation 504 übertragen, wobei für das Übertragen dieses Datensatzes von dem Weiterleitungsserver 12 zu der Fotostation 504 eine Websocket-Verbindung verwendet wird (Schritte 213 und 214). Die Fotostation 504 zeigt dann den Fortschritt des Herunterladens des Datensatzes an (Schritt 215). Es wird darauf verwiesen, dass sich in Fig. 8 in den Kästen 213 und 214 der Ausdruck "Druckcode anzeigen" auf einen Befehl von dem Serversystem 509 an die Fotostation 504 bezieht, einen Druckcode, der auch als Autorisierungscode bezeichnet werden könnte, anzuzeigen und vorher zu erzeugen. Die eigentliche Ausführung dieses Befehls erfolgt in Schritt 219, der unten beschrieben wird.

Der Status des Herunterladens des Datensatzes, insbesondere der aktuelle Fortschritt, wird über den Weiterleitungsserver 12 und den Webserver 10 an das Smartphone 3 übertragen, das den Status, insbesondere den Fortschritt, auf dem Display des Smartphones 3 anzeigt (Schritte 216, 217, 218). Die Fotostation 504 erzeugt dann einen weiteren Code, der als Druckcodebezeichnet wird, und zeigt diesen auf dem Display 5 der Fotostation 504 an (Schritt 219). Die Fotostation 504 signalisiert dann über den Weiterleitungsserver 12 und den Webserver 10 dem Smartphone 3, dass das Smartphone 3 eine Eingabe-Aufforderung anzeigen soll, die es der Person 2 ermöglicht, einen Druckcodeeinzugeben, wonach das Smartphone 3, das heißt die Webanwendung, eine entsprechende grafische Benutzeroberfläche anzeigt (Schritte 220, 221, 222). Hierbei ist die Verbindung zwischen der Fotostation 504 und dem Weiterleitungsserver 12 und die Verbindung zwischen dem Webserver 10 und dem Smartphone 3 jeweils eine Websocket-Verbindung. In Schritt 223 gibt die Person 2 den Druckcode, der auf dem Display 5 der Fotostation 504 angezeigt wird, ein, wonach der eingegebene Druckcodeüber eine Websocket-Verbindung von dem Smartphone 3 auf den Webserver 10, von dem Webserver 10 an den Weiterleitungsserver 12 und über eine weitere Websocket-Verbindung von dem Weiterleitungsserver 12 an die Fotostation 504 übertragen wird (Schritte 224, 225, 226). In Schritt 227 vergleicht die Fotostation 504 den in Schritt 219 generierten Druckcodemit dem empfangenen Druckcode, wobei, wenn der Vergleich ergibt, dass die beiden Druckcodes gleich sind, der Druckvorgang gestartet wird (Schritt 228). Das Verfahren endet in Schritt 229.

In diesem Verfahren findet die erste Kommunikation zwischen dem Serversystem 509 und der Fotostation 504 nach Schritt 212 statt. Bevor diese Kommunikation stattfindet, fragt die Webanwendung, die auf dem Webserver 10 und auf dem Smartphone 3 läuft, die Übersichtseinheit 15, welcher der Weiterleitungsserver 11...14 mit der Fotostation 504 verbunden ist, wonach dann diese Information verwendet wird, um zwischen dem Serversystem 509 und der Fotostation 504 zu kommunizieren.

Die Verbindung zwischen den Weiterleitungsserver 11...14 und den Fotostationen 104, 504 kann unter Verwendung eines Loadbalancers erfolgen. Wenn in einer Ausführungsform mehrere Webserver vorhanden sein sollten, kann auch die Verbindung zwischen den Smartphones und den Webservern mittels eines Loadbalancers erfolgen.

Obwohl oben bestimmte Ausführungsformen beschrieben worden sind, können das System und das Verfahren auch anders ausgebildet sein. Beispielsweise können an Stelle der QR-Codes andere Kodierungstechniken verwendet werden. Es ist zudem auch möglich, dass die Fotostation keine Anschlüsse zum Anschließen des Smartphones aufweist, da die Datenverbindung ja über das Serversystem stattfindet und derartige Anschlüsse für das Smartphone daher nicht zwingend benötigt werden.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Steuerung des Systems zum Drucken von Fotos, die auf einem Smartphone mit Kamera gespeichert sind, an einer Fotostation und des Smartphones selbst gemäß dem Verfahren zum Drucken von Fotos an der Fotostation kann als Programmcode eines Computerprogramms oder mehrerer Computerprogramme und/oder als entsprechende Hardware implementiert sein.

Ein Computerprogramm oder Teile des Computerprogramms wie beispielsweise die oben genannte Webanwendung kann auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

Die Erfindung betrifft ein System zum Drucken von Fotos, die auf einem Smartphone mit Kamera gespeichert sind, an einer Fotostation, insbesondere in einem SB-Bereich beispielsweise einer Drogerie, wobei die Fotostation einen Identifizierungscode wie beispielsweise einen QR-Code anzeigt, der von der Kamera des Smartphones aufgenommen wird. Das Smartphone übermittelt dann beispielsweise eine entsprechende Identifizierungsinformation an ein Serversystem und erzeugt eine grafische Benutzeroberfläche zum Auswählen zu druckender Fotos, die dann zu dem Serversystem übertragen werden. Das Serversystem ordnet die Fotos mittels der Identifizierungsinformation der Fotostation zu, erzeugt Miniaturansichten und überträgt diese auf das Smartphone. Das Smartphone ermöglicht es dann einer Person, jeder Miniaturansicht ein oder mehrere Druckparameter zuzuordnen, und übermittelt die Zuordnungen an das Serversystem, das dann die Auflösungen der ausgewählten Fotos gemäß den zugeordneten Druckparametern modifiziert und die modifizierten Fotos zu der Fotostation überträgt, die die Fotos gemäß den Druckparametern druckt.

## Patentansprüche

1. System zum Drucken von Fotos, die auf einem Smartphone (3) mit Kamera gespeichert sind, an einer Fotostation (4; 504), insbesondere in einem SB-Bereich beispielsweise einer Drogerie, wobei das System (1; 501) umfasst:
- die Fotostation (4; 504), wobei die Fotostation (4; 504) einen oder mehrere Drucker (31; 32) zum Drucken von Fotos umfasst, und ein Display (5) zum Anzeigen eines Codes aufweist, und
- ein Serversystem (9; 509), das mit der Fotostation (4; 504) über eine erste Datenverbindung verbunden ist und mit dem Smartphone (3) über eine zweite Datenverbindung verbindbar ist,
wobei das System (1; 501) so konfiguriert ist, dass die Fotostation (4; 504), das Smartphone (3) und das Serversystem (9; 509), wie folgt gesteuert werden:
- die Fotostation (4; 504) erzeugt einen Identifizierungscode, in dem eine Identifizierungsinformation codiert ist, die indikativ ist für die Fotostation, und zeigt diesen zusammen mit einer Aufforderung an eine Person (2), diesen Identifizierungscode mittels der Kamera des Smartphones (3) aufzunehmen, auf dem Display (5),
**dadurch gekennzeichnet, dass** das Steuern zusätzlich umfasst:
- nach der Aufnahme des Identifizierungscodes, übermittelt das Smartphone (3) den Identifizierungscode oder die Identifizierungsinformation, nachdem sie diese aus dem Identifizierungscode extrahiert hat, an das Serversystem (9; 509) und das Smartphone erzeugt eine grafische Benutzeroberfläche, die es der Person (2) ermöglicht, von den gespeicherten Fotos zu druckende Fotos auszuwählen, wonach die ausgewählten Fotos von dem Smartphone (3) zu dem Serversystem (9; 509) übertragen werden,
- das Serversystem (9; 509) speichert die übertragenen Fotos, ordnet diese der Fotostation mittels der Identifizierungsinformation zu, erzeugt Miniaturansichten der übertragenen Fotos und überträgt die Miniaturansichten auf das Smartphone (3),
- das Smartphone (3) erzeugt eine grafische Benutzeroberfläche, die die übertragenen Miniaturansichten anzeigt und es der Person (2) ermöglicht, jeder Miniaturansicht und damit jedem ausgewählten Foto ein oder mehrere Druckparameter zuzuordnen, um Zuordnungen zu erzeugen, wobei diese Zuordnungen jedem ausgewählten Foto zumindest eine Druckauflösung zuordnen, wobei die Druckparameter angeben, auf welche Art die Fotostation (4; 504) die Fotos drucken kann, wobei die Druckparameter zumindest eine Druckauflösung umfassen,
- das Smartphone (3) übermittelt die Zuordnungen an das Serversystem (9; 509), das dann die Auflösungen der ausgewählten Fotos derart modifiziert, dass sie der jeweiligen Druckauflösung entsprechen, wonach das Serversystem (9; 509) die ausgewählten Fotos mit veränderter Auflösung und die Zuordnungen zu der Fotostation (4; 504) überträgt, die die ausgewählten Fotos mit veränderter Auflösung gemäß den in den Zuordnungen enthaltenen Druckparametern druckt.

2. System zum Drucken von Fotos gemäß Anspruch 1, wobei die Fotostation (4; 504) konfiguriert ist, automatisch zu erkennen, ob der Fotostation (4; 504) Druckverbrauchsmaterialien fehlen, und, falls dies der Fall ist, die Druckparameter entsprechend anzupassen.

3. System zum Drucken von Fotos gemäß einem der vorhergehenden Ansprüche, wobei die Druckparameter ein Druckformat umfassen und dass die Fotostation (4; 504) ausgebildet ist, die Fotos gemäß dem jeweiligen Druckformat digital zuzuschneiden.

4. System zum Drucken von Fotos gemäß Anspruch 3, wobei die Fotostation (4; 504) ausgebildet ist, die Fotos mittels eines Thermosublimationsdruckers zu drucken und die digitalen Fotos gemäß dem jeweiligen Druckformat in Abhängigkeit von einem Zustand des Thermosublimationsdruckers digital zuzuschneiden.

5. System zum Drucken von Fotos gemäß einem der vorhergehenden Ansprüche, wobei die Fotostation (4) bestimmt, ob sich das Smartphone (3) in der Umgebung der Fotostation (4) befindet und die ausgewählten Fotos mit veränderter Auflösung gemäß den in den Zuordnungen enthaltenen Druckparametern nur dann druckt, wenn bestimmt worden ist, dass sich das Smartphone (3) in der Umgebung der Fotostation (4) befindet.

6. System zum Drucken von Fotos gemäß Anspruch 5, wobei
die Fotostation (4) einen Scanner zum Scannen eines Druckcodes aufweist und das System (1) so konfiguriert ist, dass die Fotostation (4), das Smartphone (3) und das Serversystem (9), wie folgt, gesteuert werden:
- das Serversystem (9) erzeugt einen Druckcode und überträgt den Druckcode an das Smartphone (3), wonach das Smartphone (3) den Druckcode anzeigt und die Person (2) auffordert, das Smartphone (3) mit dem angezeigten Druckcode vor den Scanner (6) der Fotostation (4) zu halten,
- das Serversystem (9) ordnet den Druckcode den ausgewählten Fotos mit veränderter Auflösung und zugeordneten Druckparameters zu und übermittelt den Druckcode zusammen mit der Zuordnungsinformation, zu welchen ausgewählten Fotos mit veränderter Auflösung und zugeordneten Druckparametern der Druckcode gehört, an die Fotostation (4),
- die Fotostation (4; 504) vergleicht den gescannten Druckcode mit dem von dem Serversystem (9) übermittelten Druckcode und druckt, wenn der Vergleich eine Übereinstimmung anzeigt, die Fotos gemäß den zugeordneten Druckparametern.

7. System zum Drucken von Fotos gemäß Anspruch 5, wobei
das System (501) so konfiguriert ist, dass die Fotostation (504), das Smartphone (3) und das Serversystem (509), wie folgt, gesteuert werden:
- die Fotostation (504) erzeugt einen Druckcode und zeigt diesen auf dem Display (5) an,
- die Fotostation (504) fordert das Smartphone (3) über das Serversystem (509) auf, eine Benutzeroberfläche zu erzeugen, die es der Person (2) ermöglicht, dem auf dem Display (5) gezeigten Druckcode in das Smartphone (3) einzugeben, wonach das Smartphone (3) die Benutzeroberfläche erzeugt und den eingegebenen Druckcode über das Serversystem (509) an die Fotostation (504) übermittelt,
- die Fotostation (504) vergleicht den erzeugten Druckcode und den eingegebenen Druckcode, wobei, wenn der Vergleich eine Übereinstimmung anzeigt, die Fotostation (504) die Fotos gemäß den zugeordneten Druckparametern druckt.

8. System zum Drucken von Fotos gemäß einem der vorhergehenden Ansprüche, wobei das Serversystem (509) einen ersten Server (10) von einem ersten Typ zur Verbindung mit dem Smartphone (3), mehrere zweite Server (11...14) von einem zweiten Typ zur Kommunikation mit der Fotostation (504) und eine Übersichtseinheit (15), in der gespeichert ist, welcher zweite Server (11...14) mit welcher Fotostation (104, 504) kommuniziert, umfasst, wobei das Serversystem (509) so ausgestaltet ist, dass der erste Server (10) die Übersichtseinheit (15) fragt, mit welchem zweiten Server (12) die Fotostation (504) kommuniziert, auf dem die Fotos zu drucken sind, wonach der erste Server (10) über den erfragten zweiten Server (12) mit der Fotostation (504) kommuniziert.

9. System zum Drucken von Fotos gemäß einem der vorhergehenden Ansprüche, wobei die Fotostation (4; 504) nach Ablauf einer vorgegebenen Zeit einen neuen Identifizierungscode erzeugt.

10. System zum Drucken von Fotos gemäß einem der vorhergehenden Ansprüche,
wobei das System (1; 501) so konfiguriert ist, dass die Fotostation (4; 504), das Smartphone (3) und das Serversystem (9; 509), wie folgt, gesteuert werden:
- die Fotostation (4; 504) übermittelt eine Kennzeichnungsinformation, die indikativ ist für die Fotostation (4; 504), und die Druckparameter an das Serversystem (9; 509), bevor die Fotostation (4; 504) den Identifizierungscode erzeugt,
- das Serversystem (9; 509) speichert die Kennzeichnungsinformation und die Druckparameter, ordnet der Kennzeichnungsinformation und den Druckparametern einen Schlüssel, der die Identifizierungsinformation ist, zu und übermittelt die Identifizierungsinformation an die Fotostation (4; 504), wonach die Fotostation (4; 504) den Identifizierungscode erzeugt, in dem die Identifizierungsinformation codiert ist,
wobei, nach dem Übertragen der Fotos von dem Smartphone (3) zu dem Serversystem (9; 509), das Serversystem (9; 509) die übertragenen Fotos speichert, diese der Fotostation mittels der Identifizierungsinformation zuordnet, Miniaturansichten der übertragenen Fotos erzeugt und die Miniaturansichten und die Druckparameter auf das Smartphone (3) überträgt.

11. System zum Drucken von Fotos gemäß einem der Ansprüche 1 bis 10, wobei das System (1; 501) so konfiguriert ist, dass die Fotostation (4; 504), das Smartphone (3) und das Serversystem (9; 509) so gesteuert werden, dass die Fotostation (4; 504) den Identifizierungscode derart erzeugt, dass er auch indikativ ist für die Druckparameter, wobei das Smartphone (3) die Druckparameter von dem Identifizierungscode extrahiert.

12. Fotostation zum Drucken von Fotos, die auf einem Smartphone (3) mit Kamera gespeichert sind, insbesondere in einem SB-Bereich beispielsweise einer Drogerie, wobei die Fotostation (4; 504) ausgebildet ist, als Fotostation (4; 504) des Systems gemäß einem der Ansprüche 1 bis 11 verwendet zu werden.

13. Serversystem zur Kommunikation mit a) einer Fotostation (4; 504) zum Drucken von Fotos, die auf einem Smartphone (3) mit Kamera gespeichert sind, insbesondere in einem SB-Bereich beispielsweise einer Drogerie, und b) dem Smartphone (3), wobei das Serversystem (9; 509) ausgebildet ist, als Serversystem (5; 509) des Systems gemäß einem der Ansprüche 1 bis 11 verwendet zu werden.

14. Verfahren zum Drucken von Fotos, die auf einem Smartphone (3) mit Kamera gespeichert sind, an einer Fotostation (4; 504), insbesondere in einem SB-Bereich beispielsweise einer Drogerie, mittels eines Systems (1; 501) gemäß einem der Ansprüche 1 bis 11, wobei das Verfahren umfasst:
- Erzeugen eines Identifizierungscodes durch die Fotostation (4; 504), in dem eine Identifizierungsinformation codiert ist, die indikativ ist für die Fotostation,
- Anzeigen des Identifizierungscodes auf dem Display (5) zusammen mit einer Aufforderung an eine Person (2), diesen Identifizierungscode mittels der Kamera des Smartphones (3) aufzunehmen, auf dem Display (5) der Fotostation (4; 504),
**dadurch gekennzeichnet, dass** das Verfahren zusätzlich umfasst:
- nach der Aufnahme des Identifizierungscodes, Übermitteln des Identifizierungscodes oder der Identifizierungsinformation, nachdem das Smartphone (3) diese aus dem Identifizierungscode extrahiert hat, von dem Smartphone (3) an das Serversystem (9; 509) und Erzeugen einer grafischen Benutzeroberfläche, die es der Person (2) ermöglicht, von den gespeicherten Fotos zu druckende Fotos auszuwählen, wonach die ausgewählten Fotos von dem Smartphone (3) zu dem Serversystem (9; 509) übertragen werden, wo die übertragenen Fotos gespeichert werden, wobei das Serversystem (9; 509) die gespeicherten Fotos mittels der Identifizierungsinformation der Fotostation (4; 504) zuordnet,
- Erzeugen von Miniaturansichten der übertragenen Fotos durch das Serversystem (9; 509) und Übertragen der Miniaturansichten von dem Serversystem (9; 509) auf das Smartphone (3),
- Erzeugen einer grafischen Benutzeroberfläche auf dem Smartphone (3), die die übertragenen Miniaturansichten anzeigt und es der Person (2) ermöglicht, jeder Miniaturansicht und damit jedem ausgewählten Foto ein oder mehrere Druckparameter zuzuordnen, um Zuordnungen zu erzeugen, wobei diese Zuordnungen jedem ausgewählten Foto zumindest eine Druckauflösung zuordnen, wobei die Druckparameter angeben, auf welche Art die Fotostation die Fotos drucken kann,
- Übermitteln der Zuordnungen von dem Smartphone (3) an das Serversystem (9; 509), das dann die Auflösungen der ausgewählten Fotos derart modifiziert, dass sie der jeweiligen Druckauflösung entsprechen, wonach das Serversystem (9; 509) die ausgewählten Fotos mit veränderter Auflösung und die Zuordnungen zu der Fotostation (4; 504) überträgt, die die ausgewählten Fotos mit veränderter Auflösung gemäß den in den Zuordnungen enthaltenen Druckparametern druckt.

15. Computerprogramm zum Drucken von Fotos, die auf einem Smartphone (3) mit Kamera gespeichert sind, an einer Fotostation (4; 504), insbesondere in einem SB-Bereich beispielsweise einer Drogerie, wobei das Computerprogramm Programmcodemittel aufweist, die angepasst sind, ein System (1; 501) zum Drucken von Fotos an einer Fotostation gemäß einem der Ansprüche 1 bis 11 und das Smartphone (3) derart zu steuern, dass das Verfahren zum Drucken von Fotos an einer Fotostation gemäß Anspruch 14 durchgeführt wird, wenn das Computerprogramm auf dem System und dem Smartphone ausgeführt wird.

## Claims

1. A system for printing photos, which are stored on a smartphone (3) with a camera, at a photo station (4; 504), in particular in a self-service area, for example, of a drugstore, wherein the system (1; 501) comprises:
- the photo station (4; 504), wherein the photo station (4; 504) comprises one or more printers (31; 32) for printing photos and a display (5) for displaying a code, and
- a server system (9; 509) which is connected to the photo station (4; 504) via a first data connection and which can be connected to the smartphone (3) via a second data connection,
wherein the system (1; 501) is configured such that the photo station (4; 504), the smartphone (3), and the server system (9; 509) are controlled as follows:
- the photo station (4; 504) generates an identification code, which encodes an identification information indicative of the photo station, and, on the display (5), displays the identification code and a request to record the identification code with the camera of the smartphone (3) to a person (2),
wherein the controlling is additionally **characterised by**:
- after recording the identification code, the smartphone (3) transfers the identification code, or the identification information the smartphone (3) has extracted from the identification code, to the server system (9; 509) and the smartphone (3) generates a graphical user interface which allows the person (2) to select photos to be printed from the saved photos, after which the selected photos are transferred from the smartphone (3) to the server system (9; 509),
- the server system (9; 509) saves the transferred photos, allocates them to the photo station by means of the identification information, generates thumbnails of the transferred photos and transfers the thumbnails to the smartphone (3),
- the smartphone (3) generates a graphical user interface which displays the transferred thumbnails and enables the person (2) to allocate one or more print parameters to each thumbnail and thereby to each selected photo in order to generate allocations, wherein the allocations allocate at least a print resolution to each selected photo, wherein the print parameters specify how the photo station (4; 504) is supposed to print the photos, and wherein the print parameters comprise at least a print resolution,
- the smartphone (3) transfers the allocations to the server system (9; 509) which modifies the resolutions of the selected photos such that the modified resolutions correspond to the respective print resolutions, after which the server system (9; 509) transfers the selected photos with the respective modified resolutions and the allocations to the photo station (4; 504) which then prints the selected photos with the respective modified resolutions according to the print parameters contained in the allocations.

2. A system for printing photos according to claim 1, wherein the photo station (4; 504) is configured such that it automatically detects whether the photo station (4; 504) is missing consumable supplies required for printing and, if so, adjusts the print parameters accordingly.

3. A system for printing photos according to any of the preceding claims, wherein the print parameters comprise a print format and the photo station (4; 504) is configured to digitally crop the photos according to the respective print format.

4. A system for printing photos according to claim 3, wherein the photo station (4; 504) is configured to print the photos by means of a thermal sublimation printer and to digitally crop the digital photos according to the respective print format depending on a state of the thermal sublimation printer.

5. A system for printing photos according to any of the preceding claims, wherein the photo station (4) determines whether the smartphone (3) is located in the vicinity of the photo station (4) and prints the selected photos with the modified resolutions in accordance with the print parameters contained in the allocations only if it has been determined that the smartphone (3) is located in the vicinity of the photo station (4).

6. A system for printing photos according to claim 5, wherein the photo station (4) comprises a scanner for scanning a print code and the system (1) is configured such that the photo station (4), the smartphone (3), and the server system (9) are controlled as follows:
- the server system (9) generates a print code and transfers the print code to the smartphone (3), after which the smartphone (3) displays the print code and makes a request to the person (2) to hold the smartphone (3) displaying the displayed print code in front of the scanner (6) of the photo station (4),
- the server system (9) allocates the print code to the selected photos with the modified resolutions and allocated print parameters and transfers the print code and the allocation information, which comprise information regarding which selected photos with modified resolutions and allocated print parameters belong to the print code, to the photo station (4),
- the photo station (4; 504) compares the scanned print code with the print code transferred by the server system (9) and, if the comparison indicates a match, prints the photos according to the allocated print parameters.

7. A system for printing photos according to claim 5, wherein the system (501) is configured such that the photo station (504), the smartphone (3), and the server system (509) are controlled as follows:
- the photo station (504) generates a print code and displays it on the display (5),
- the photo station (504) prompts the smartphone (3) via the server system (509) to generate a graphical user interface which enables the person (2) to enter the print code displayed on the display (5) into the smartphone (3), after which the smartphone (3) generates the graphical user interface and transfers the entered print code via the server system (509) to the photo station (504),
- the photo station (504) compares the generated print code and the entered print code, whereby, if the comparison indicates a match, the photo station (504) prints the photos according to the allocated print parameters.

8. A system for printing photos according to any one of the preceding claims, wherein the server system (509) comprises a first server (10) of a first type for connecting to the smartphone (3), a plurality of second servers (11...14) of a second type for communicating with the photo station (504), and an overview unit (15) storing the information which second server (11...14) communicates with which photo station (104; 504), wherein the server system (509) is configured such that the first server (10) makes a request to the overview unit (15) which second server (12) the photo station (504) dedicated for printing the photos communicates with, after which the first server (10) communicates with the photo station (504) via the requested second server (12).

9. A system for printing photos according to any of the preceding claims, wherein the photo station (4; 504) generates a new identification code after a predetermined time has elapsed.

10. A system for printing photos according to any of the preceding claims, wherein the system (1; 501) is configured such that the photo station (4; 504), the smartphone (3), and the server system (9; 509) are controlled as follows:
- the photo station (4; 504) transfers a labelling information indicative of the photo station (4; 504) and the print parameters to the server system (9; 509) before the photo station (4; 504) generates the identification code,
- The server system (9; 509) saves the labelling information and the print parameters, allocates a key, which is the identification information, to the labelling information and the print parameters and transfers the identification information to the photo station (4; 504), after which the photo station (4; 504) generates the identification code which encodes the identification information,
wherein, after transferring the photos from the smartphone (3) to the server system (9; 509), the server system (9; 509) saves the transferred photos, allocates them to the photo station (4; 504) by means of the identification information, generates thumbnails of the transferred photos and transfers the thumbnails and the print parameters to the smartphone (3).

11. A system for printing photos according to any one of claims 1 to 10, wherein the system (1; 501) is configured such that the photo station (4; 504), the smartphone (3) and the server system (9; 509) are controlled such that the photo station (4; 504) generates the identification code in such a way that it is also indicative of the print parameters, whereby the smartphone (3) extracts the print parameters from the identification code.

12. A photo station for printing photos, which are stored on a smartphone (3) with a camera, in particular in a self-service area, for example, of a drugstore, wherein the photo station (4; 504) is configured to be used as a photo station (4; 504) of the system according to any one of claims 1 to 11.

13. A server system for communicating with a) a photo station (4; 504) for printing photos, which are stored on a smartphone (3) with a camera, in particular in a self-service area, for example, of a drugstore, and b) the smartphone (3), wherein the server system (9; 509) is configured to be used as the server system (5; 509) of the system according to any one of claims 1 to 11.

14. A method for printing photos, which are stored on a smartphone (3) with a camera, at a photo station (4; 504), in particular in a self-service area, for example, of a drugstore, by means of a system (1; 501) according to any of the one of claims 1 to 11, wherein the method comprises:
- generating of an identification code, in which an identification information indicative of the photo station (4; 504) is encoded, by the photo station (4; 504),
- displaying of the identification code and of a request to a person (2) to record the identification code by means of the camera of the smartphone (3) on the display (5) of the photo station (4; 504),
wherein the method additionally comprises:
- after recording the identification code, transferring the identification code or the identification information from the smartphone (3) to the server system (9; 509) following the extraction of the identification information from the identification code by the smartphone (3) and generating a graphical user interface enabling the person (2) to select the photos to be printed from the saved photos, afterwards transferring the selected photos from the smartphone (3) to the server system (9; 509), where the transferred photos are saved, whereby the server systems (9; 509) allocates the photos by means of the identification information to the photo station (4; 504),
- generating of thumbnails of the transferred photos by the server system (9; 509) and transferring the thumbnails from the server system (9; 509) to the smartphone (3).
- generating a graphical user interface which displays the transferred thumbnails on the smartphone (3) and enables the person (2) to allocate one or more print parameters to each thumbnail and thus each selected photo in order to generate allocations, whereby the allocations allocate at least a print resolution to each selected photo, whereby the print parameters specify how the photo station (4) is supposed to print the photos,
- transferring the allocations from the smartphone (3) to the server system (9; 509) which modifies the resolutions of the selected photos in such a way that they correspond to the respective print resolutions, after which the server system (9; 509) transfers the selected photos with modified resolutions and the allocations to the photo station (4; 504) which prints the selected photos with modified resolutions according to the print parameters contained in the allocations.

15. A computer programme for printing photos, which are stored on a smartphone (3) with a camera, at a photo station (4; 504), in particular in a self-service area, for example, of a drugstore, wherein the computer programme comprises programming code means configured to control a system (1; 501) for printing photos at a photo station (4) according to any one of claims 1 to 11 and a smartphone (3) such that the method for printing photos at a photo station (4) according to claim 14 is carried out when the computer programme is executed on the system and on the smartphone (3).

## Revendications

1. Système pour imprimer des photos, qui sont mises en mémoire sur un téléphone intelligent (3) avec appareil photo, sur une borne photo (4 ; 504), en particulier dans une zone libre-service par exemple d'une droguerie, dans lequel le système (1 ; 501) comprend :
- la borne photo (4 ; 504), dans lequel la borne photo (4 ; 504) comprend une ou plusieurs imprimantes (31 ; 32) pour imprimer des photos, et présente un écran (5) pour afficher un code, et
- un système de serveur (9 ; 509), qui est relié à la borne photo (4 ; 504) par l'intermédiaire d'une première liaison de données et peut être relié au téléphone intelligent (3) par l'intermédiaire d'une deuxième liaison de données,
dans lequel le système (1 ; 501) est configuré de sorte que la borne photo (4 ; 504), le téléphone intelligent (3) et le système de serveur (9 ; 509) sont commandés de la manière suivante :
- la borne photo (4 ; 504) génère un code d'identification dans lequel une information d'identification est codée, qui indique la borne photo, et affiche celui-ci, conjointement avec une invitation adressée à une personne (2) d'enregistrer ce code d'identification au moyen de l'appareil photo du téléphone intelligent (3), sur l'écran (5),
**caractérisé en ce que** la commande comprend en plus :
- après l'enregistrement du code d'identification, le téléphone intelligent (3) transmet le code d'identification ou l'information d'identification, après qu'il a extrait celle-ci du code d'identification, au système de serveur (9 ; 509) et le téléphone intelligent génère une interface graphique utilisateur, qui permet à la personne (2) de sélectionner des photos à imprimer parmi les photos mises en mémoire, après quoi les photos sélectionnées sont transférées à partir du téléphone intelligent (3) vers le système de serveur (9 ; 509),
- le système de serveur (9 ; 509) met en mémoire les photos transférées, attribue celles-ci à la borne photo au moyen de l'information d'identification, génère des vues miniatures des photos transférées et transfère les vues miniatures sur le téléphone intelligent (3),
- le téléphone intelligent (3) génère une interface graphique utilisateur, qui affiche les vues miniatures transférées et permet à la personne (2) d'attribuer, à chaque vue miniature et ainsi à chaque photo sélectionnée, un ou plusieurs paramètres d'impression, afin de générer des attributions, dans lequel ces attributions attribuent à chaque photo sélectionnée au moins une résolution d'impression, dans lequel les paramètres d'impression spécifient de quelle façon la borne photo (4 ; 504) peut imprimer les photos, dans lequel les paramètres d'impression comprennent au moins une résolution d'impression,
- le téléphone intelligent (3) transmet les attributions au système de serveur (9 ; 509), qui modifie alors les résolutions des photos sélectionnées, de telle sorte qu'elles correspondent à la résolution d'impression respective, après quoi le système de serveur (9 ; 509) transfère les photos sélectionnées avec une résolution modifiée et les attributions à la borne photo (4 ; 504), qui imprime les photos sélectionnées avec une résolution modifiée selon les paramètres d'impression contenus dans les attributions.

2. Système pour imprimer des photos selon la revendication 1, dans lequel
la borne photo (4 ; 504) est configurée pour reconnaître automatiquement si la borne photo (4 ; 504) manque de consommables, et, si c'est le cas, pour adapter les paramètres d'impression de manière correspondante.

3. Système pour imprimer des photos selon l'une quelconque des revendications précédentes,
dans lequel les paramètres d'impression comprennent un format d'impression et la borne photo (4 ; 504) est réalisée pour couper à dimension les photos selon le format d'impression numérique respectif.

4. Système pour imprimer des photos selon la revendication 3, dans lequel
la borne photo (4 ; 504) est réalisée pour imprimer les photos au moyen d'une imprimante à sublimation thermique et pour couper à dimension de façon numérique les photos numériques selon le format d'impression respectif en fonction d'un état de l'imprimante à sublimation thermique.

5. Système pour imprimer des photos selon l'une quelconque des revendications précédentes, dans lequel
la borne photo (4) détermine si le téléphone intelligent (3) se trouve dans l'environnement de la borne photo (4) et n'imprime les photos sélectionnées avec une résolution modifiée selon les paramètres d'impression contenus dans les attributions que lorsqu'il a été déterminé que le téléphone intelligent (3) se trouve dans l'environnement de la borne photo (4).

6. Système pour imprimer des photos selon la revendication 5, dans lequel
la borne photo (4) présente un scanner pour scanner un code d'impression et le système (1) est configuré de sorte que la borne photo (4), le téléphone intelligent (3) et le système de serveur (9) sont commandés de la manière suivante :
- le système de serveur (9) génère un code d'impression et transfère le code d'impression sur le téléphone intelligent (3), après quoi le téléphone intelligent (3) affiche le code d'impression et invite la personne (2) à tenir le téléphone intelligent (3) avec le code d'impression affiché devant le scanner (6) de la borne photo (4),
- le système de serveur (9) attribue le code d'impression aux photos sélectionnées avec une résolution modifiée et les paramètres d'impression attribués et transmet le code d'impression conjointement avec l'information d'attribution, dont font partie les photos sélectionnées avec une résolution modifiée et les paramètres d'impression attribués du code d'impression, à la borne photo (4),
- la borne photo (4 ; 504) compare le code d'impression scanné au code d'impression transmis par le système de serveur (9) et, lorsque la comparaison affiche une concordance, imprime les photos selon les paramètres d'impression attribués.

7. Système pour imprimer des photos selon la revendication 5, dans lequel
le système (501) est configuré de sorte que la borne photo (504), le téléphone intelligent (3) et le système de serveur (509) sont commandés de la manière suivante :
- la borne photo (504) génère un code d'impression et affiche celui-ci sur l'écran (5),
- la borne photo (504) invite le téléphone intelligent (3), par l'intermédiaire du système de serveur (509), à générer une interface utilisateur qui permet à la personne (2) d'entrer le code d'impression affiché sur l'écran (5) dans le téléphone intelligent (3), après quoi le téléphone intelligent (3) génère l'interface utilisateur et transmet le code d'impression entré par l'intermédiaire du système de serveur (509) à la borne photo (504),
- la borne photo (504) compare le code d'impression généré et le code d'impression entré, dans lequel, lorsque la comparaison affiche une concordance, la borne photo (504) imprime les photos selon les paramètres d'impression attribués.

8. Système pour imprimer des photos selon l'une quelconque des revendications précédentes, dans lequel
le système de serveur (509) comprend un premier serveur (10) d'un premier type pour la connexion au téléphone intelligent (3), plusieurs deuxièmes serveurs (11 ... 14) d'un deuxième type pour la communication avec la borne photo (504) et une unité de vue d'ensemble (15), dans laquelle il est mis en mémoire quel deuxième serveur (11 ... 14) communique avec quelle borne photo (104, 504), dans lequel le système de serveur (509) est conçu de sorte que le premier serveur (10) demande à l'unité de vue d'ensemble (15) avec quel deuxième serveur (12) communique la borne photo (504) sur laquelle les photos sont imprimées, après quoi le premier serveur (10) communique avec la borne photo (504) par l'intermédiaire du deuxième serveur (12) interrogé.

9. Système pour imprimer des photos selon l'une quelconque des revendications précédentes, dans lequel
la borne photo (4 ; 504), une fois un temps prédéfini écoulé, génère un nouveau code d'identification.

10. Système pour imprimer des photos selon l'une quelconque des revendications précédentes, dans lequel
le système (1 ; 501) est configuré de sorte que la borne photo (4 ; 504), le téléphone intelligent (3) et le système de serveur (9 ; 509) sont commandés de la manière suivante :
- la borne photo (4 ; 504) transmet une information d'identification, qui indique la borne photo (4 ; 504), et les paramètres d'impression au système de serveur (9 ; 509), avant que la borne photo (4 ; 504) génère le code d'identification,
- le système de serveur (9 ; 509) met en mémoire l'information d'identification et les paramètres d'impression, attribue à l'information d'identification et aux paramètres d'impression une clé, qui est l'information d'identification, et transmet l'information d'identification à la borne photo (4 ; 504), après quoi la borne photo (4; 504) génère le code d'identification dans lequel l'information d'identification est codée,
dans lequel, après la transmission des photos à partir du téléphone intelligent (3) vers le système de serveur (9 ; 509), le système de serveur (9 ; 509) met en mémoire les photos transférées, attribue celles-ci à la borne photo au moyen de l'information d'identification, génère des vues miniatures des photos transférées et transfère les vues miniatures et les paramètres d'impression sur le téléphone intelligent (3).

11. Système pour imprimer des photos selon l'une quelconque des revendications 1 à 10, dans lequel
le système (1 ; 501) est configuré de sorte que la borne photo (4 ; 504), le téléphone intelligent (3) et le système de serveur (9 ; 509) sont commandés de sorte que la borne photo (4 ; 504) génère le code d'identification, de telle sorte qu'il indique également les paramètres d'impression, dans lequel le téléphone intelligent (3) extrait les paramètres d'impression du code d'identification.

12. Borne photo pour imprimer des photos, qui sont mises en mémoire sur un téléphone intelligent (3) avec appareil photo, en particulier dans une zone libre-service par exemple d'une droguerie, dans laquelle la borne photo (4 ; 504) est réalisée pour être utilisée en tant que borne photo (4 ; 504) du système selon l'une quelconque des revendications 1 à 11.

13. Système de serveur pour la communication avec a) une borne photo (4 ; 504) pour imprimer des photos qui sont mises en mémoire sur un téléphone intelligent (3) avec appareil photo, en particulier dans une zone libre-service par exemple d'une droguerie, et b) le téléphone intelligent (3), dans lequel le système de serveur (9 ; 509) est réalisé pour être utilisé en tant que système de serveur (5 ; 509) du système selon l'une quelconque des revendications 1 à 11.

14. Procédé pour imprimer des photos, qui sont mises en mémoire sur un téléphone intelligent (3) avec appareil photo, sur une borne photo (4 ; 504), en particulier dans une zone libre-service par exemple d'une droguerie, au moyen d'un système (1 ; 501) selon l'une quelconque des revendications 1 à 11, dans lequel le procédé comprend :
- la génération d'un code d'identification par la borne photo (4 ; 504) dans lequel une information d'identification est codée, qui indique la borne photo,
- l'affichage du code d'identification sur l'écran (5), conjointement avec une invitation adressée à une personne (2) d'enregistrer ce code d'identification au moyen de l'appareil photo du téléphone intelligent (3), sur l'écran (5) de la borne photo (4 ; 504),
**caractérisé en ce que** le procédé comprend en plus :
- après l'enregistrement du code d'identification, la transmission du code d'identification ou de l'information d'identification, après que le téléphone intelligent (3) a extrait celle-ci du code d'identification, à partir du téléphone intelligent (3) au système de serveur (9 ; 509) et la génération d'une interface utilisateur graphique, qui permet à la personne (2) de sélectionner des photos à imprimer parmi les photos mises en mémoire, après quoi les photos sélectionnées sont transférées à partir du téléphone intelligent (3) vers le système de serveur (9 ; 509), où les photos transférées sont mises en mémoire, dans lequel le système de serveur (9 ; 509) attribue les photos mises en mémoire au moyen de l'information d'identification de la borne photo (4 ; 504),
- la génération de vues miniatures des photos transférées par le système de serveur (9 ; 509) et le transfert des vues miniatures à partir du système de serveur (9 ; 509) sur le téléphone intelligent (3),
- la génération d'une interface utilisateur graphique sur le téléphone intelligent (3), qui affiche les vues miniatures transférées et permet à la personne (2) d'attribuer à chaque vue miniature et ainsi à chaque photo sélectionnée un ou plusieurs paramètres d'impression, afin de générer des attributions, dans lequel ces attributions attribuent à chaque photo sélectionnée au moins une résolution d'impression, dans lequel les paramètres d'impression spécifient de quelle manière la borne photo peut imprimer les photos,
- la transmission des attributions à partir du téléphone intelligent (3) au système de serveur (9 ; 509), qui modifie alors les résolutions des photos sélectionnées, de telle sorte qu'elles correspondent à la résolution d'impression respective, après quoi le système de serveur (9 ; 509) transfère les photos sélectionnées avec une résolution modifiée et les attributions à la borne photo (4 ; 504), qui imprime les photos sélectionnées avec une résolution modifiée selon les paramètres d'impression contenus dans les attributions.

15. Programme d'ordinateur pour imprimer des photos, qui sont mises en mémoire sur un téléphone intelligent (3) avec appareil photo, sur une borne photo (4 ; 504), en particulier dans une zone libre-service par exemple d'une droguerie, dans lequel le programme d'ordinateur présente des moyens de code de programme qui sont adaptés pour commander un système (1 ; 501) pour imprimer des photos sur une borne photo selon l'une quelconque des revendications 1 à 11 et le téléphone intelligent (3), de telle sorte que le procédé pour imprimer des photos sur une borne photo selon la revendication 14 est mis en œuvre lorsque le programme d'ordinateur est exécuté sur le système et le téléphone intelligent.
